# EUROPEAN PATENT APPLICATION

(11) **EP 4 676 108 A1**
(43) Date of publication of application: **07.01.2026**
(21) Application number: 24785323.7
(22) Date of filing: 05.04.2024
(51) Int. Cl.: H04W 8/24, H04L 67/303, H04W 8/20, H04W 8/18

(54) **METHOD AND DEVICE FOR PROFILE SERVER PROCESSING DELAY RESOLUTION FOR DEVICE CHANGE**

(30) Priority: 07.04.2023 KR 20230046205; 06.10.2023 KR 20230133372
(71) Applicant: SAMSUNG ELECTRONICS CO., LTD., Yeongtong-gu Suwon-si, Gyeonggi-do 16677 (KR)
(72) Inventor: YOON, Kangjin, Suwon-si, Gyeonggi-do 16677 (KR); KANG, Sujung, Suwon-si, Gyeonggi-do 16677 (KR)
(74) Representative: Gulde & Partner
(86) International application number: PCT/KR2024/004532
(87) International publication number: WO 2024/210626

(57) **Abstract**

The disclosure relates to a 5G or 6G communication system for supporting a higher data transmission rate. For example, the present disclosure provides a method and a device for re-installing a profile when changing an eUICC terminal.

## Description

### [Technical Field]

The disclosure relates to a method and a device for installing and managing an embedded universal integrated circuit card (eUICC).

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems, various services can be provided, and accordingly there is a need for ways to effectively provide these services.

A universal integrated circuit card (UICC) is a smart card inserted and used in a mobile communication UE or the like, and is also referred to as a UICC card. The UICC may include an access control module that enables the UE to connect to a mobile communication operator's network. Examples of such access control modules include a universal subscriber identity module (USIM), a subscriber identity module (SIM), and an IP multimedia service identity module (ISIM). A UICC containing a USIM is commonly referred to as a USIM card. Similarly, a UICC containing a SIM module is typically called a SIM card.

Among UICC cards, a UICC that is used while being embedded in a UE is called an embedded UICC (eUICC). Typically, an eUICC refers to a UICC card that is used while being embedded in a UE and configured such that a SIM module can be remotely downloaded and selected. In addition, the SIM module information downloaded is collectively referred to as an eUICC profile, or more simply, a profile.

### [Disclosure of Invention]

### [Technical Problem]

An aspect of the disclosure is to effectively provide services in a mobile communication system.

An aspect of an embodiment disclosed herein is to provide a method and a device in which a UE selects a communication service and connects to a network in a communication system.

An embodiment disclosed herein may provide a method and a device in which a UE online downloads a profile for connecting to a network and installs and manages the same in a communication system.

An aspect of an embodiment disclosed herein is to provide a method and a device in which a profile installed by a UE to connect to a network can be efficiently re-downloaded by another UE in a communication system.

An aspect of an embodiment disclosed herein is to provide a method and a device capable of efficiently resolving the server processing delay that occurs in case that a profile installed by a UE to connect to a network is re-downloaded by another UE in a communication system.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

In order to solve the aforementioned problems, a method performed by a terminal in a wireless communication system according to an embodiment of the disclosure may include: identifying information requesting transfer of a profile to another terminal; transmitting a device change request message regarding the profile to a profile server; in case that processing of the device change request regarding the profile is delayed, receiving, from the profile server, a device change request response message including information regarding a subscription mediation server capable of confirming a device change processing result regarding the profile; receiving, from the subscription mediation server, a message including information associated with completion of the processing of the device change request regarding the profile; and resuming a device change processing process regarding the profile with the profile server.

According to embodiments, the device change request message may include at least one of information regarding a subscription mediation server supported by the terminal or information indicating whether the terminal supports a function of confirming a device change processing status of the profile server.

According to embodiments, the device change request response message may include at least one of an address of the subscription mediation server, an identifier of a section shared by the terminal and the profile server in which device change processing is being performed, information regarding a timepoint to request a profile processing status confirmation, or a device change session identifier.

According to embodiments, the information associated with completion of the processing of the device change request regarding the profile may include at least one of an address of the profile server, an event identifier, an identifier of a section shared by the terminal and the profile server in which device change processing is being performed, a device change session identifier, or an identifier of the profile.

In addition, in order to solve the aforementioned problems, a method performed by a profile server in a wireless communication system according to an embodiment of the disclosure may include: receiving a device change request message regarding a profile from a terminal; in case that processing of the device change request regarding the profile is delayed, transmitting, to the terminal, a device change request response message including information regarding a subscription mediation server capable of confirming a device change processing result regarding the profile; transmitting, to the subscription mediation server, an event registration request message requesting event registration regarding the device change request processing result of the terminal; and resuming a device change processing process regarding the profile with the terminal according to transmission of information associated with completion of the processing of the device change request regarding the profile from the subscription mediation server to the terminal.

According to embodiments, the device change request message may include at least one of information regarding a subscription mediation server supported by the terminal or information indicating whether the terminal supports a function of confirming a device change processing status of the profile server.

According to embodiments, the device change request response message may include at least one of an address of the subscription mediation server, an identifier of a section shared by the terminal and the profile server in which device change processing is being performed, information regarding a timepoint to request a profile processing status confirmation, or a device change session identifier.

According to embodiments, the event registration request message may include at least one of an address of the profile server, an event identifier, an event type, an identifier of a section shared by the terminal and the profile server in which device change processing is being performed, a device change session identifier, or an identifier of the profile.

In addition, in order to solve the aforementioned problems, a terminal in a wireless communication system according to an embodiment of the disclosure may include: a transceiver; and a controller configured to identify information requesting transfer of a profile to another terminal, transmit a device change request message regarding the profile to a profile server through the transceiver, in case that processing of the device change request regarding the profile is delayed, receive a device change request response message including information regarding a subscription mediation server capable of confirming a device change processing result regarding the profile from the profile server through the transceiver, receive a message including information associated with completion of the processing of the device change request regarding the profile from the subscription mediation server through the transceiver, and resume a device change processing process regarding the profile with the profile server.

In addition, in order to solve the aforementioned problems, a profile server in a wireless communication system according to an embodiment of the disclosure may include: a transceiver; and a controller configured to receive a device change request message regarding a profile from a terminal through the transceiver, in case that processing of the device change request regarding the profile is delayed, transmit a device change request response message including information regarding a subscription mediation server capable of confirming a device change processing result regarding the profile to the terminal through the transceiver, transmit an event registration request message requesting event registration regarding the device change request processing result of the terminal to the subscription mediation server through the transceiver, and resume a device change processing process regarding the profile with the terminal according to transmission of information associated with completion of the processing of the device change request regarding the profile from the subscription mediation server to the terminal.

### [Advantageous Effects of Invention]

According to embodiments of the disclosure, services can be effectively provided in a mobile communication system.

According to an embodiment of the disclosure, when a UE in a communication system wants to re-install a profile installed in the UE in another UE, the UE may have an activation code necessary for profile reinstallation reissued by a profile server or may receive a profile transfer request result from the profile server. In case that a processing delay occurs in the profile server, the UE may confirm the processing result through the profile server or subscription mediation server and may restart the request processor. If necessary, the UE may first delete the profile to be transferred, may deliver a profile deletion proof which may prove the profile deletion to the server, and may deliver the activation code or profile transfer result to another UE such that the other UE can efficiently download the profile from the profile server and install the profile.

According to an embodiment of the disclosure, when a profile server in a communication system receives a request from a UE which wants to reinstall a profile installed in the UE in another UE, and in case that processing of the request is delayed, the profile server may request the UE to confirm the request processing result from the profile server, and may continue future processes regarding the request if the processing is completed. The profile server may request the UE to delete the profile if necessary, may request delivery of a profile deletion proof if necessary, may generate an activation code which may be used to download a prepared profile if necessary, may deliver the activation code to the UE, and may process the profile download.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

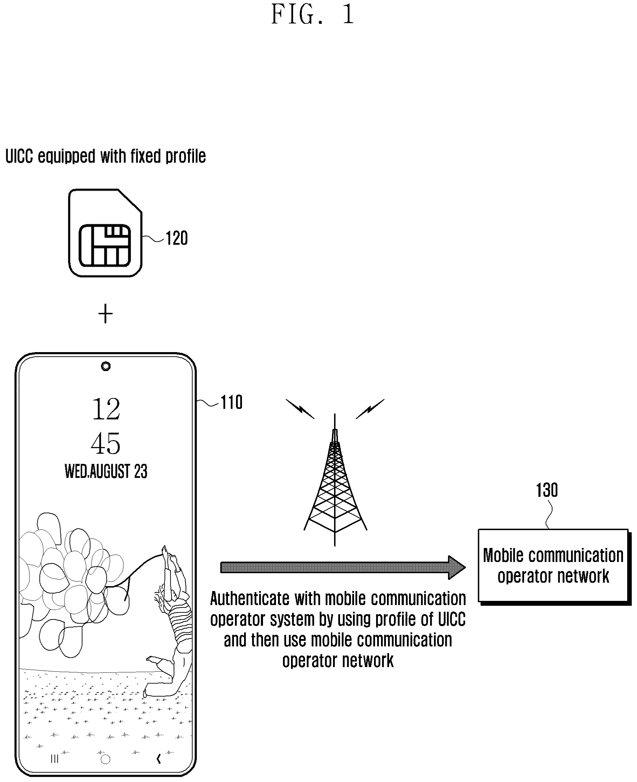

FIG. 1 is a diagram illustrating a method for connecting a UE to a mobile communication network by using a universal integrated circuit card (UICC) equipped with a fixed profile according to an embodiment of the disclosure.

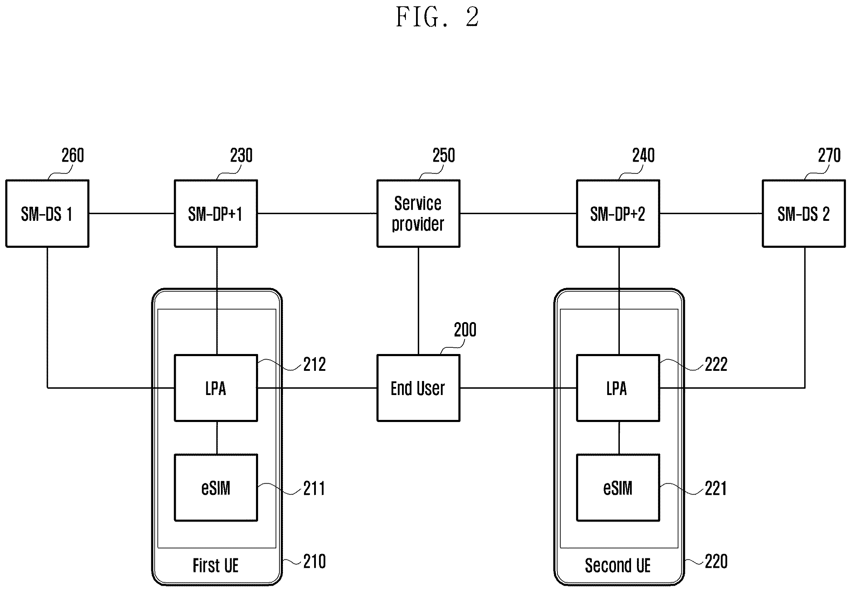

FIG. 2 is a diagram illustrating the configuration of a system in which a UE manages a profile installed in a first UE according to a user input and installs a profile in a second UE, according to an embodiment of the disclosure.

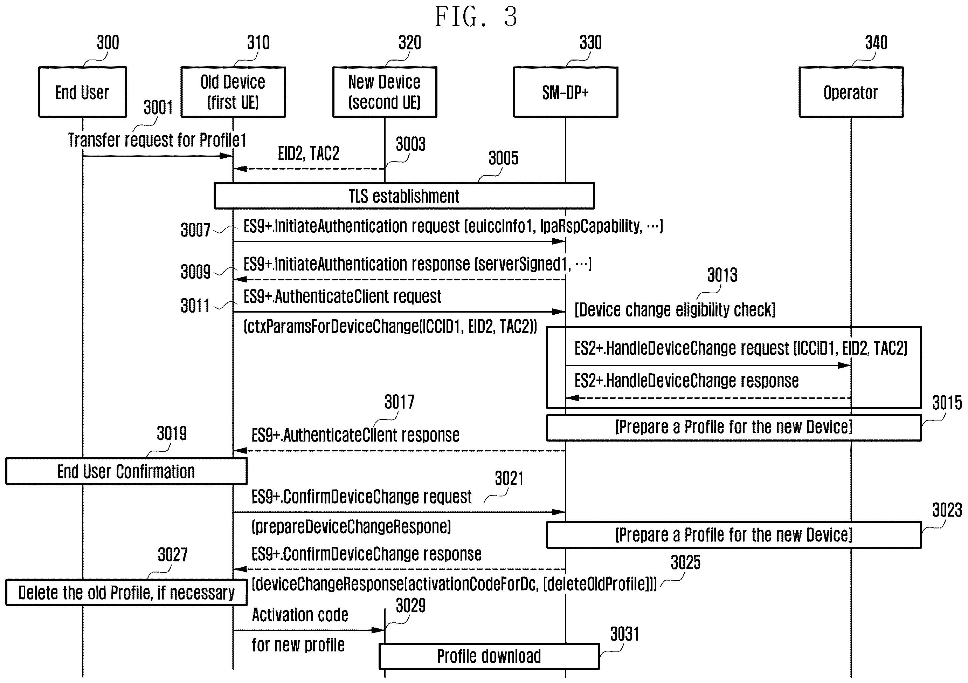

FIG. 3 is a diagram illustrating an example of the procedure between a first UE, a second UE, and a server for the second UE to download a profile according to an embodiment of the disclosure.

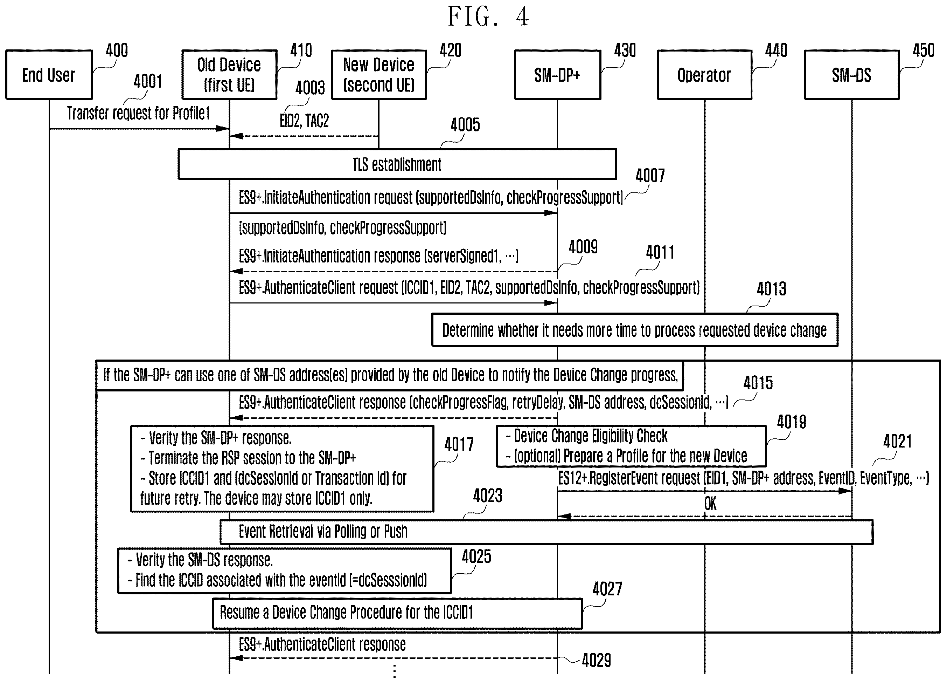

FIG. 4 is a sequence diagram illustrating a procedure according to an embodiment of the disclosure, in which the first UE requests the second UE to change the device of the profile installed in the first UE through a profile server, in case that a delay occurs in processing the device change request, the profile server notifies the first UE that the processing result will be delivered through a subscription mediation server, the profile server registers an event corresponding to the device change processing result in the subscription mediation server, and the first UE continues the device change process by using the corresponding information.

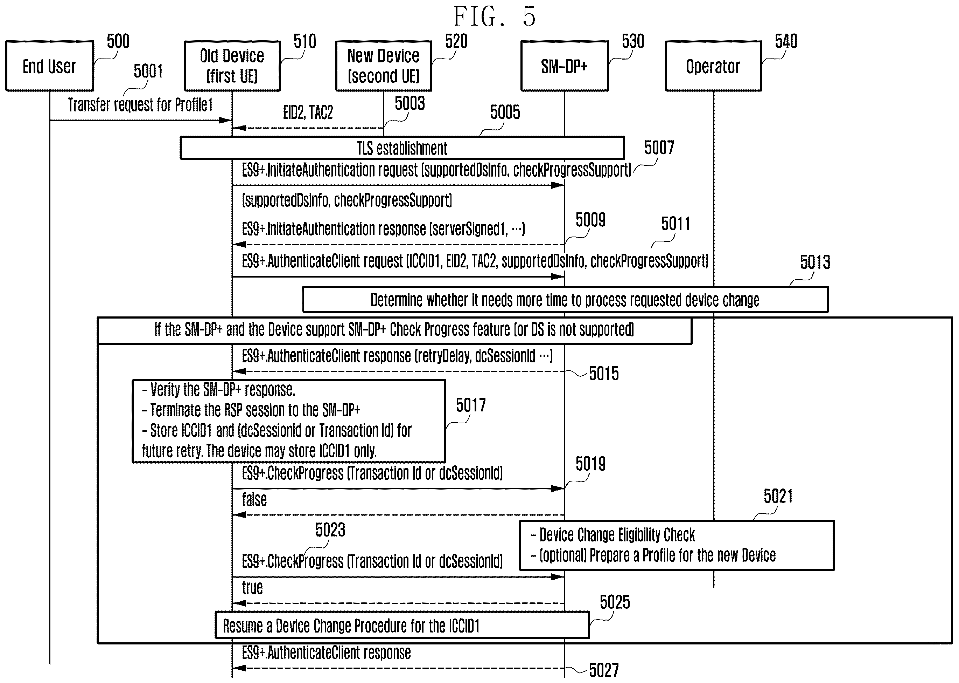

FIG. 5 is a sequence diagram illustrating a procedure according to an embodiment of the disclosure, in which the first UE requests the second UE to change the device of the profile installed in the first UE through a profile server, in case that a delay occurs in processing the device change request, the first UE checks the processing progress with the profile server, and upon completion of processing, the first UE continues the device change process.

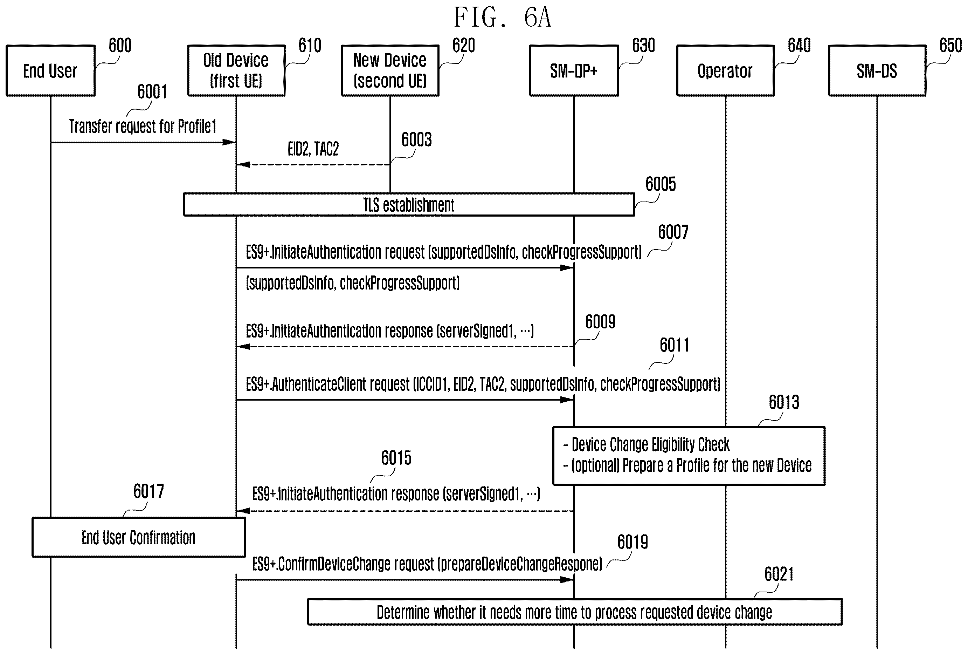

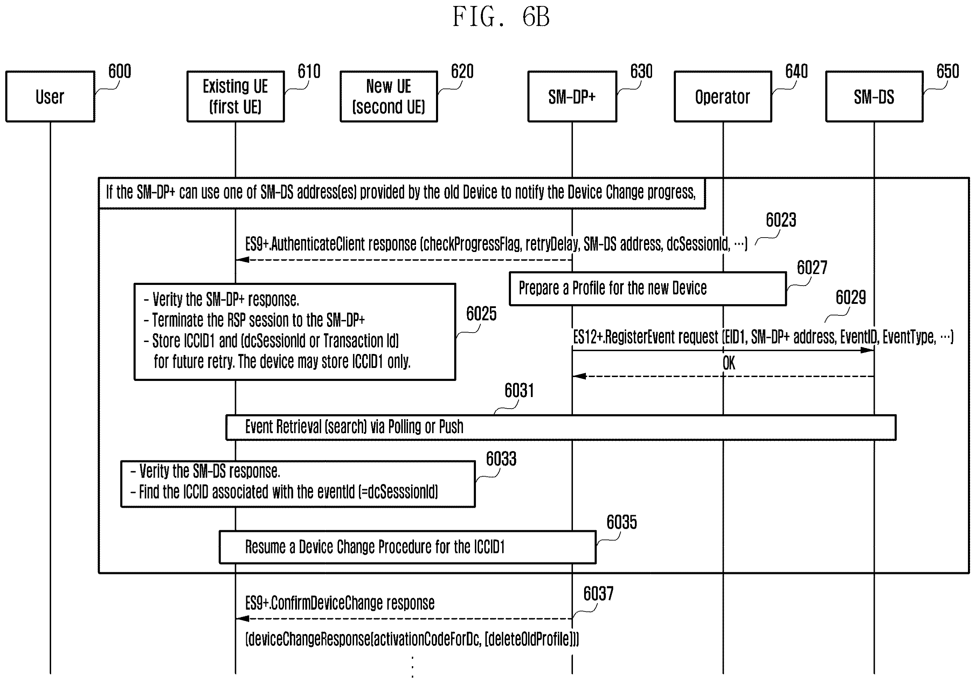

FIG. 6A and FIG. 6B are sequence diagrams illustrating a procedure according to an embodiment of the disclosure, in which during a process of the first UE conducting a device change of a profile installed in the first UE to the second UE through a profile server, in case that a delay occurs while the profile server receives and processes the confirmation result regarding the profile transfer requested by the first UE, the profile server notifies the first UE that the processing result will be delivered through the subscription mediation server, the profile server registers an event corresponding to the device change processing result in the subscription mediation server, and the first UE continues the device change process by using the corresponding information.

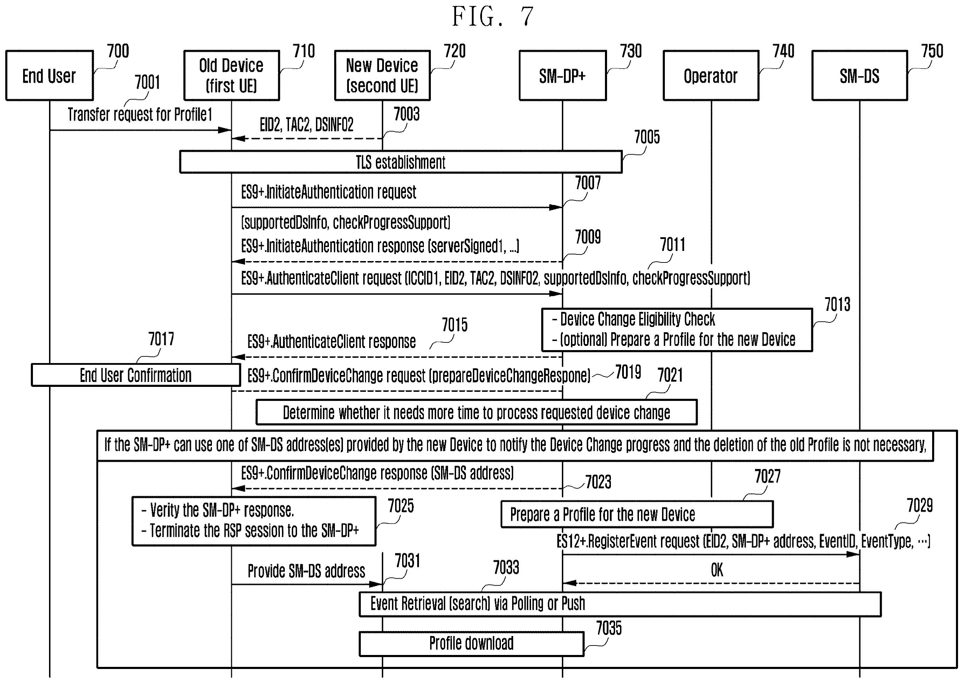

FIG. 7 is a sequence diagram illustrating a procedure according to an embodiment of the disclosure, in which during a process of the first UE conducting a device change of a profile installed in the first UE to the second UE through a profile server, in case that a delay occurs while the profile server receives and processes the confirmation result regarding the profile transfer requested by the first UE, the second UE checks the processing result from the profile server and, if the processing is completed, continues the device change process.

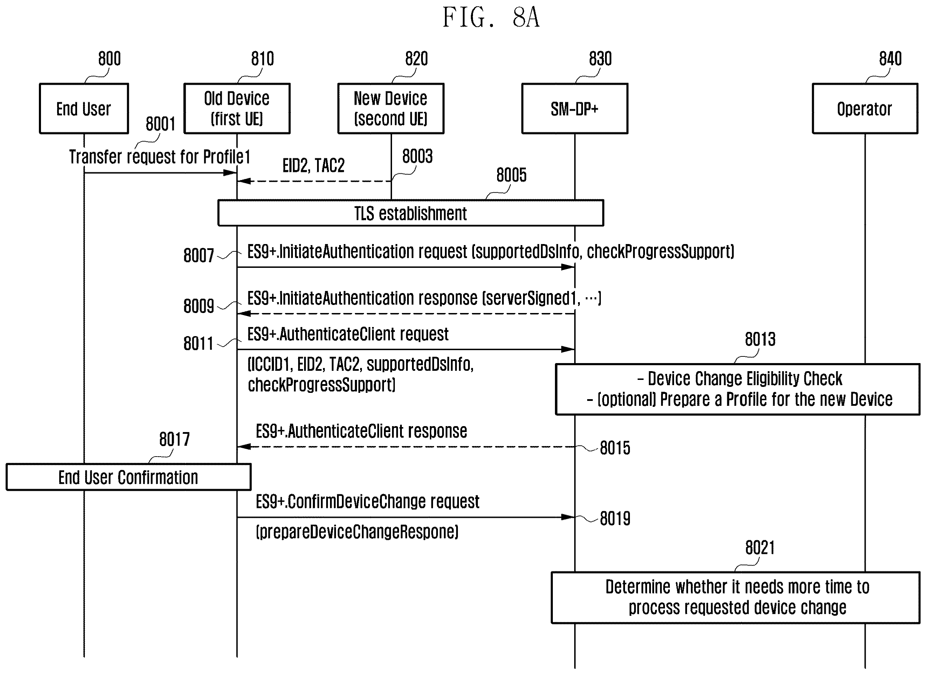

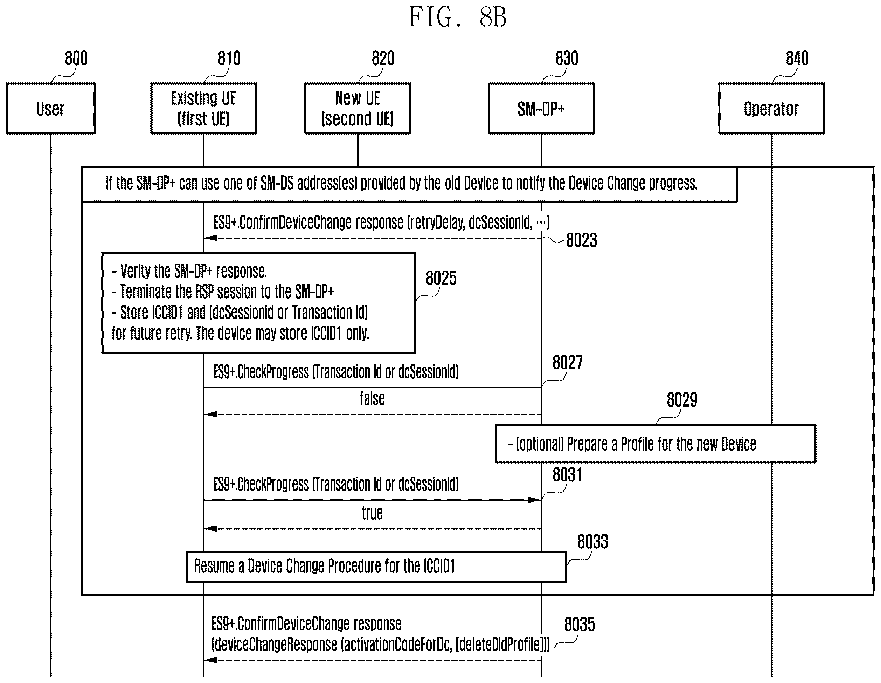

FIG. 8A and FIG. 8B are sequence diagrams illustrating a procedure according to an embodiment of the disclosure, in which during a process of the first UE conducting a device change of a profile installed in the first UE to the second UE through a profile server, in case that a delay occurs while the profile server receives and processes the confirmation result regarding the profile transfer requested by the first UE, the first UE checks the processing progress with the profile server, and upon completion of processing, the first UE continues the device change process.

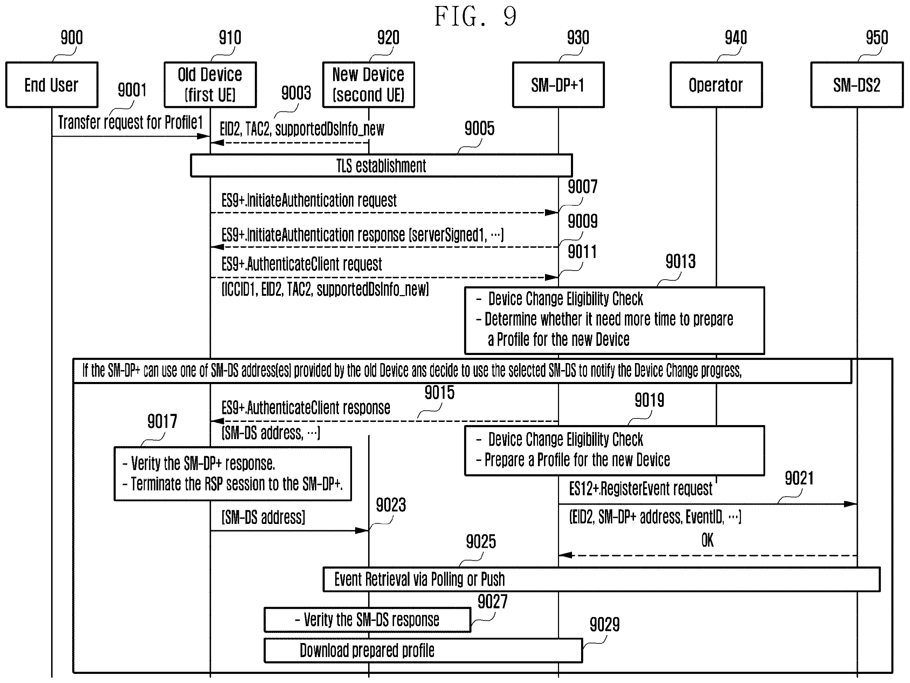

FIG. 9 is a sequence diagram illustrating a procedure according to an embodiment of the disclosure, in which the first UE requests the second UE to change the device of the profile installed in the first UE through a profile server, in case that a delay occurs in processing the device change request, the profile server notifies the first UE that the profile will deliver the processing result to the second UE through a subscription mediation server, the profile is prepared after the device change processing, the profile server registers an event corresponding to information that may be used to download the profile in the subscription mediation server, and the second UE downloads the profile prepared for the device change by using the information.

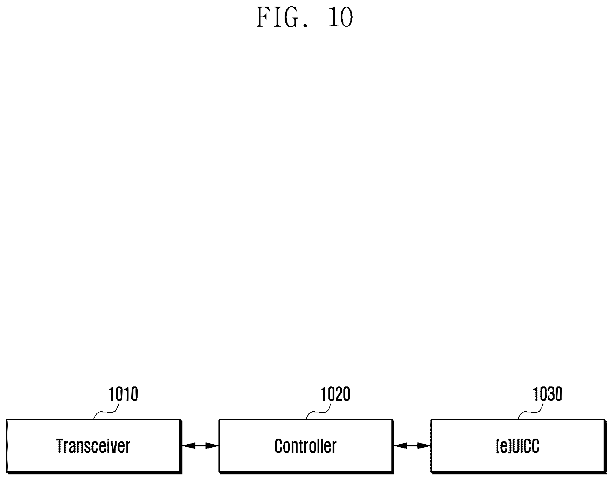

FIG. 10 is a block diagram illustrating the components of a UE according to an embodiment of the disclosure.

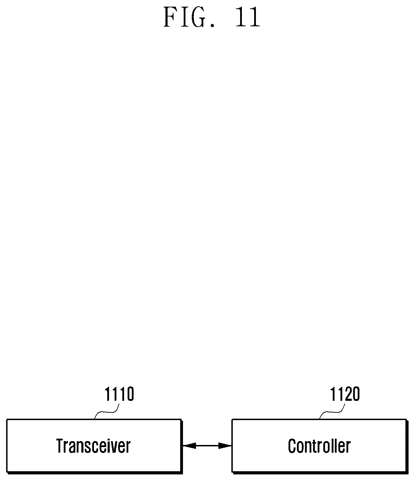

FIG. 11 is a block diagram illustrating the components of a profile server according to an embodiment of the disclosure.

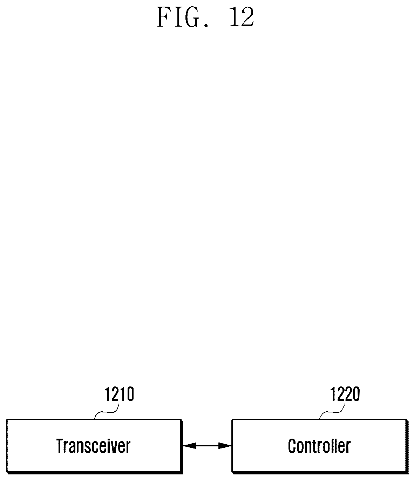

FIG. 12 is a block diagram illustrating the components of a subscription mediation server according to an embodiment of the disclosure.

### [Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

Particular terms as used in the following description are merely provided to help understanding of the disclosure, and other types of terms may be used without departing from the scope of the technical idea of the disclosure.

In the disclosure, a universal integrated circuit card (UICC) is a smart card inserted and used in a mobile communication terminal (device, user equipment (UE)) or the like, and is also referred to as a UICC card.

The UICC is a chip that stores network access authentication information for mobile communication subscribers, personal information such as phonebooks and SMSs, and performs subscriber authentication and traffic security key generation when connecting to mobile communication networks such as GSM, WCDMA, LTE, etc., thereby enabling secure mobile communication usage.

The UICC may include communication applications or access control modules for a UE to connect to a mobile communication operator's network. Examples of such communication applications or access control modules include a universal subscriber identity module (USIM), a subscriber identity module (SIM), and an IP multimedia service identity module (ISIM). In addition, the UICC may provide high-level security functions for integration of various applications such as electronic wallets, ticketing, and electronic passports.

A UICC containing a USIM is commonly referred to as a USIM card. Similarly, a UICC containing a SIM module is typically called a SIM card.

In the disclosure, "SIM card," "UICC card," "USIM card," and "UICC containing ISIM" may be used with the same/similar meaning. For example, the content of the disclosure may be equally applied to a SIM card, a USIM card, an ISIM card, or a general UICC card.

A SIM card stores personal information of a mobile communication subscriber and performs subscriber authentication and traffic security key generation when connecting to a mobile communication network, thereby enabling secure mobile communication usage.

Generally, a SIM card is manufactured at the request of a specific mobile communication operator as a card dedicated to the operator, and authentication information for accessing that operator's network, such as the universal subscriber identity module (USIM) application, international mobile subscriber identity (IMSI), K value, and OPc value, is preinstalled on the card before it is shipped. Therefore, the SIM card is supplied to the mobile communication operator and then provided to the subscriber, and subsequently, management tasks such as installation, modification, or deletion of applications within the UICC may be performed as needed by using technologies such as over the air (OTA). A subscriber may insert the UICC card into his/her mobile communication UE and can use the mobile communication operator's network and use application services. When replacing the UE, the subscriber may transfer the UICC card from the existing UE to a new UE, allowing the authentication information, mobile phone number, personal phonebook, and the like stored in the UICC card to be used seamlessly in the new UE.

However, SIM cards present inconveniences for mobile communication UE users when receiving services from different mobile communication operators. That is, a mobile communication UE user must physically acquire a SIM card to receive services from a specific mobile communication operator in an inconvenient manner. For example, when traveling to another country, the user needs to obtain a local SIM card to use local mobile communication services, which is inconvenient. While roaming services alleviate some of this inconvenience, they are relatively expensive, and services may be unavailable if there is no agreement between operators.

On the other hand, remotely downloading and installing a SIM module onto a UICC card may significantly address these inconveniences. For example, a user may download the SIM module for the desired mobile communication service onto the UICC card at a time of choosing. Such a UICC card may be used in the following manner: multiple SIM modules are downloaded and installed, and only one SIM module among the same is selected. Such a UICC card may or may not be fixed to the UE. In particular, a UICC that is used while being embedded in a UE is referred to as an embedded UICC (eUICC). Typically, an eUICC refers to a UICC card that is used while being embedded in a UE and configured such that a SIM module can be remotely downloaded and selected. In the disclosure, a UICC card configured such that a SIM module can be remotely downloaded and selected is referred to as an eUICC. For example, among UICC cards configured such that a SIM module can be remotely downloaded and selected, UICC cards that are embedded or not embedded in a UE are collectively referred to as eUICCs. In addition, downloaded SIM module information is collectively referred to as an eUICC profile, or more simply, a profile.

In the disclosure, an embedded UICC (eUICC) is a chip-type security module embedded in a UE, rather than a removable UICC that can be inserted into and detached from a UE. Typically, an eUICC may be used while being embedded in a UE. Meanwhile, an eUICC may be configured such that profiles can be downloaded and installed by using the over the air (OTA) technology. An eUICC may be referred to as a UICC configured such that profiles can be downloaded and installed.

In the disclosure, the method of downloading and installing profiles in an eUICC by using the OTA technology may also be applied to removable UICCs that can be inserted into and detached from a UE. For example, embodiments of the disclosure may be applied to UICCs configured such that profiles can be downloaded and installed by using the OTA technology.

In the disclosure, "UICC" may be used interchangeably with "SIM," and "eUICC" may be used interchangeably with "eSIM."

In the disclosure, a "profile" may refer to a package in software form that includes applications, file systems, authentication key values, and other like stored within a UICC.

In the disclosure, a "USIM profile" may have the same meaning as a "profile" or may refer to a package in software form that includes information contained in the USIM application within a profile.

In the disclosure, the operation of a UE enabling a profile may refer to the operation of changing the state of the profile to an enabled state, thereby configuring the UE to receive communication services through the mobile operator that provided the profile. A profile in the enabled state may be referred to as an "enabled profile."

In the disclosure, the operation of a UE disabling a profile may refer to the operation of changing the state of the profile to a disabled state, thereby configuring the UE to be unable to receive communication services through the mobile operator that provided the profile. A profile in the disabled state may be referred to as a "disabled profile."

In the disclosure, the operation of a UE deleting a profile may refer to the operation of changing the state of the profile to a deleted state, thereby configuring the UE to be unable to enable or disable the profile any longer. A profile in the deleted state may be referred to as a "deleted profile."

In the disclosure, the operation of a UE enabling, disabling, or deleting a profile may not involve immediately changing the state of each profile to an enabled, disabled, or deleted state, but may refer to an operation in which each profile is first marked to be enabled, to be disabled, or to be deleted, and after the UE or the UICC of the UE performs a specific operation (for example, performing a REFRESH or RESET command), each profile is changed to the enabled, disabled, or deleted state. The operation of marking a specific profile in a scheduled state (e.g., to be enabled, to be disabled, or to be deleted) is not necessarily limited to marking one scheduled state with regard to one profile, and it is also possible to mark one or more profiles in identical or different scheduled states, mark one profile in one or more scheduled states, or mark one or more profiles in one or more identical or different scheduled states.

In addition, in case that a UE marks one or more scheduled states with regard to a given profile, the two scheduled may be marked as an integrated one. For example, in case that a profile is marked to be disabled and to be deleted, the profile may be marked to be disabled and deleted in an integrated manner.

Furthermore, operations in which a UE marks scheduled states with regard to one or more profiles may be performed sequentially or simultaneously. In addition, operations in which a UE marks scheduled states with regard to one or more profiles and thereafter changes the actual profile's state may be performed sequentially or simultaneously.

In the disclosure, a "profile provisioning server" may include functions such as generating a profile, encrypting a generated profile, generating profile remote management commands, or encrypting generated profile remote management commands. The profile provisioning server may be referred to as subscription manager data preparation (SM-DP), subscription manager data preparation plus (SM-DP+), an off-card entity of profile domain, a profile encryption server, a profile generation server, a profile provisioner (PP), a profile provider, or a profile provisioning credentials (PPC) holder.

In the disclosure, a "profile management server" may include functions for managing profiles. The profile management server may be referred to as subscription manager secure routing (SM-SR), subscription manager secure routing plus (SM-SR+), an off-card entity of eUICC profile manager, a profile management credentials (PMC) holder, an eUICC manager (EM), or a profile manager (PP).

In the disclosure, a profile provisioning server may also encompass the functions of a profile management server. Accordingly, in various embodiments of the disclosure, operations of a profile provisioning server may be performed by a profile management server. Likewise, operations of a profile management server or SM-SR may be performed by a profile provisioning server.

In the disclosure, a "subscription mediation server" may be referred to as a subscription manager discovery service (SM-DS), a discovery service (DS), a root SM-DS, or an alternative SM-DS. The subscription mediation server may receive an event register request (register event request) from one or more profile provisioning servers or subscription mediation servers. In addition, one or more subscription mediation servers may be used in combination. In this case, the first subscription mediation server may receive an event register request not only from a profile provisioning server but also from the second subscription mediation server.

In the disclosure, the profile provisioning server and subscription mediation server may be referred to as "remote SIM provisioning (RSP) servers." An RSP server may be expressed as subscription manager XX (SM-XX).

In the disclosure, "terminal" may be referred to as a mobile station (MS), user equipment (UE), a user terminal (UT), a wireless terminal, an access terminal (AT), a subscriber unit, a subscriber station (SS), a wireless device, a wireless communication device, a wireless transmit/receive unit (WTRU), a mobile node, a mobile, or other terms. In one embodiment, the UE may include a cellular phone, a smartphone having wireless communication functions, a personal digital assistant (PDA) having wireless communication functions, a wireless modem, a portable computer having wireless communication functions, a digital camera or a similar imaging device having wireless communication functions, a gaming device having wireless communication functions, a music storage and playback home appliance having wireless communication functions, an Internet home appliance capable of wireless Internet access and browsing, as well as portable units or UEs integrating combinations of such functions. In addition, the UE may include, but is not limited to, a machine-to-machine (M2M) UE or a machine type communication (MTC) UE/device. In the disclosure, the UE may also be referred to as an electronic device.

In the disclosure, an "electronic device" may have an embedded UICC capable of downloading and installing a profile. In case that the electronic device has no embedded UICC, a physically separate UICC may be inserted into and connected to the electronic device. For example, a UICC may be inserted into the electronic device as a card. The electronic device may include a UE. The UE may be a UE that includes a UICC capable of downloading and installing a profile. A UICC may not only be embedded in a UE but, in case that the UE and UICC are separated, the UICC may be inserted into and connected to the UE. A UICC capable of downloading and installing a profile may, for example, be referred to as an eUICC.

In the disclosure, a UE or an electronic device may include software or an application installed within the UE or electronic device so as to control a UICC or an eUICC. The software or application installed within the UE or electronic device so as to control a UICC or an eUICC may, for example, be referred to as a local profile assistant (LPA).

In the disclosure, a "profile distinguisher" may be referred to as a profile identifier (ID), an integrated circuit Card ID (ICCID), a matching ID, an event ID, an activation code, an activation code token, a command code, a command code token, a signed command code, an unsigned command code, an ISD-P, or a factor matching a profile domain (PD). A profile ID may represent a unique ID of each profile. The profile ID may further include the address of a profile provisioning server (SM-DP+) capable of indexing the profile. In addition, the profile distinguisher may further include the signature of the profile provisioning server (SM-DP+).

In the disclosure, an "eUICC ID" may be a unique ID of an eUICC embedded in a UE and may be referred to as an EID. In addition, in case that a provisioning profile is preinstalled in the eUICC, the eUICC ID may be the provisioning profile's profile ID. In addition, in one embodiment of the disclosure, in case that the UE and the eUICC chip are not separable, the eUICC ID may be the UE ID. The eUICC ID may also refer to a specific secure domain of the eUICC chip.

In the disclosure, a "profile container" may be referred to as a profile domain. A profile container may be a security domain.

In the disclosure, an "application protocol data unit (APDU)" may be a message used by a UE to interact with an eUICC. In addition, an APDU may be a message used by a profile provider (PP) or a profile manager (PM) to interact with an eUICC.

In the disclosure, "profile provisioning credentials (PPC)" may be means used for mutual authentication, profile encryption, and signing between a profile provisioning server and an eUICC. The PPC may include one or more from among symmetric keys, Rivest Shamir Adleman (RSA) certificates and private keys, elliptic curve cryptography (ECC) certificates and private keys, root certification authorities (CA), and certificate chains. In addition, in case that multiple profile provisioning servers exist, different PPCs may be stored or used in the eUICC with regard to the multiple profile provisioning servers.

In the disclosure, "profile management credentials (PMC)" may be means used for mutual authentication, transmitted data encryption, and signing between a profile management server and an eUICC. The PMC may include one or more from among symmetric keys, RSA certificates and private keys, ECC certificates and private keys, root CAs, and certificate chains. In addition, in case that multiple profile management servers exist, different PMCs may be stored or used in the eUICC with regard to the multiple profile management servers.

In the disclosure, an "AID" may be an application identifier. This value may be a distinguisher that distinguishes different applications within an eUICC.

In the disclosure, an "event" may be a general term referring to profile download, remote profile management, or other management/processing commands regarding a profile or an eUICC. An event may be referred to as a remote SIM provisioning operation (or RSP operation) or an event record, and each event may be represented by data including at least one or more from among an event identifier (event ID or EventID) corresponding thereto, a matching identifier (matching ID or MatchingID), the address (FQDN, IP address, or URL) of the profile provisioning server (SM-DP+) or subscription mediation server (SM-DS) in which the event is stored, the signature of the profile provisioning server (SM-DP+) or subscription mediation server (SM-DS), and the digital certificate of the profile provisioning server (SM-DP+) or subscription mediation server (SM-DS).

Data corresponding to an event may be referred to as a "command code." A part or all of the procedure using a command code may be referred to as a "command code processing procedure," "command code procedure," or "local profile assistant application programming interface (LPA API)." Profile download may be used interchangeably with profile installation.

In addition, the term "event type" may be used to indicate whether a specific event is profile download, remote profile management (e.g., deletion, enabling, disabling, replacement, update, etc.), or other profile or eUICC management/processing commands, and may be referred to as an operation type (or OperationType), an operation class (or OperationClass), an event request type, an event class, or an event request class. Any event identifier (EventID or MatchingID) may have a designated path or usage (EventID Source or MatchingID Source) through which the UE has acquired the event identifier (EventID or MatchingID).

In the disclosure, a "profile package" may be used interchangeably with a profile or as a term representing a data object of a specific profile, and may be referred to as a profile TLV or a profile package TLV. In case that a profile package is encrypted by using encryption parameters, the same may be referred to as a protected profile package (PPP) or protected profile package TLV (PPP TLV). In case that a profile package is encrypted by using encryption parameters that can only be decrypted by a specific eUICC, the same may be referred to as a bound profile package (BPP) or a bound profile package TLV (BPP TLV). A profile package TLV may be a data set expressing information constituting a profile in a TLV (tag, length, value) format.

In the disclosure, "local profile management (LPM)" may be referred to as profile local management, local management, a local management command, a local command, an LPM package, a profile local management package, a local management package, a local management command package, or a local command package. The LPM may be used to change (update) the state (enabled, disabled, deleted) of a specific profile or update the content of a specific profile (e.g., profile nickname or profile metadata) through software installed in a UE. The LPM may include one or more local management commands. In this case, the target profile of each local management command may be identical to or different from each other.

In the disclosure, "remote profile management (RPM)" may be referred to as profile remote management, remote management, a remote management command, a remote command, an RPM package, a profile remote management package, a remote management package, a remote management command package, or a remote command package. The RPM may be used to change the state (enabled, disabled, deleted) of a specific profile or to update the content of a specific profile (e.g., profile nickname or profile metadata). The RPM may include one or more remote management commands, and in such cases, the target profile for each remote management command may be identical or different with regard to each command.

In the disclosure, "certificate" or "digital certificate" may refer to a digital certificate used for mutual authentication based on an asymmetric key, which is configured by a pair of a public key (PK) and a secret key (SK). Each certificate may include one or more public keys (PK), a public key identifier (PKID) corresponding to each public key, and an identifier (certificate issuer ID) and a digital signature of the certificate issuer (CI) who issued the certificate.

In addition, "certificate issuer" may be referred to as a certification issuer, a certificate authority (CA), or a certification authority.

In the disclosure, "public key (PK)" and "public key ID (PKID)" may be used interchangeably to refer to a specific public key, a certificate containing that public key, a portion of a specific public key, a portion of a certificate containing that public key, an operation result (e.g., hash) value of a specific public key, an operation result (e.g., hash) value of a certificate containing that public key, an operation result (e.g., hash) value of a portion of a specific public key, an operation result (e.g., hash) value of a portion of a certificate containing that public key, or a storage space where pieces of data are stored.

In the disclosure, in case that certificates (primary certificates) issued by a single certificate issuer are used to issue other certificates (secondary certificates), or in case that secondary certificates are used to issue tertiary or higher-level certificates in a linked manner, the correlation between these certificates may be referred to as a certificate chain or certificate hierarchy. The CI certificate used for the initial certificate issuance may be referred to as a root of certificate, a top-level certificate, a root CI, a root CI certificate, a root CA, or a root CA certificate.

In the disclosure, "mobile operator" may refer to an entity that provides communication services to a UE and may collectively encompass the mobile operator's business supporting system (BSS), operational supporting system (OSS), point of sale (POS) terminal, and other IT systems. In addition, in the disclosure, a mobile operator is not limited to representing a single entity providing communication services but may also be used to refer to a group or association (or consortium) of one or more entities or a representative acting on behalf of such a group or consortium. Furthermore, in the disclosure, a mobile operator may be referred to as an operator (OP or Op.), a mobile network operator (MNO), a mobile virtual network operator (MVNO), a service provider (SP), a profile owner (PO), or the like. Each mobile operator may be assigned or configure at least one name and/or object identifier (OID) of the mobile operator. In case that a mobile operator refers to a group, consortium, or representative of one or more entities, the name or object identifier of such a group, consortium, or representative may be a name or object identifier shared by all entities belonging to that group or consortium or by all entities collaborating with that representative.

In the disclosure, "AKA" may refer to authentication and key agreement and may denote an authentication algorithm used for accessing 3GPP and 3GPP2 networks.

In the disclosure, "K" is a cryptographic key value stored in the eUICC, used in the AKA authentication algorithm.

In the disclosure, "OPc" is a parameter value that may be stored in the eUICC, used in the AKA authentication algorithm.

In the disclosure, "NAA" refers to a network access application, which may be an application such as a USIM or ISIM, stored in a UICC and used for accessing a network. The NAA may be a network access module.

In the disclosure, an "indicator" may be used to express whether a specific function, configuration, or operation is required or not required, or may be used to represent the function, configuration, or operation itself. In addition, in the disclosure, an indicator may be expressed in various forms, such as an alphanumeric string, a Boolean operator (TRUE or FALSE), a bitmap, an array, or a flag, and other expressions with the same meaning may be used interchangeably.

Hereinafter, a method and apparatus for installing and managing an eUICC profile according to the disclosure will be described in detail with reference to FIG. 1 to FIG. 12.

FIG. 1 is a diagram illustrating a method for connecting a UE to a mobile communication network by using a UICC equipped with a profile fixed in the UE according to an embodiment of the disclosure.

As illustrated in FIG. 1, the UICC 120 may be inserted into the UE 110. For example, the UICC 120 may be removable or pre-embedded in the UE.

The fixed profile of the UICC 120 equipped with a fixed profile means that the "access information" enabling connection to a specific mobile operator is fixed. For example, the access information may include an IMSI which is a subscriber identifier and a K or Ki value required for authentication with the network alongside the subscriber identifier.

The UE 110 according to various embodiments may perform authentication with a mobile communication operator's authentication processing system (e.g., home location register (HLR) or AuC) by using the UICC 120. For example, the authentication process may be an authentication and key agreement (AKA) process. Upon successful authentication, the UE 110 may utilize mobile communication services such as phone calls or mobile data through the mobile communication operator network 130 of the mobile communication system.

FIG. 2 is a diagram illustrating the configuration of a system in which a UE manages a profile installed in a first UE according to a user input and installs a profile in a second UE, according to an embodiment of the disclosure.

As illustrated in FIG. 2, the UEs 210 and 220 may be equipped with eSIMs 211 and 221, respectively, and the eSIMs 211 and 221 may have profiles (not illustrated) installed therein. In addition, the UEs 210 and 220 may have LPAs 212 and 222 installed therein. The eSIMs 211 and 221 may be controlled by the LPAs 212 and 222. The user 200 may control the profiles installed in the eSIMs 211 and 221 of respective UEs 210 and 220 through the LPAs 212 and 222.

The user 200 may receive communication services from a service provider (hereinafter referred to as "mobile operator" or "operator" 250). To this end, the first UE 210 may have a profile (not illustrated) of the operator 250 installed therein. For example, in case that the user 200 purchases a new second UE 220, he/she may attempt to reinstall the profile installed in the first UE 210 into the second UE 220.

The operator 250 may be connected to a first profile server (SM-DP+ 1) 230 and a second profile server (SM-DP+ 2) 240. The LPA 212 of the first UE 210 may be connected to the first profile server 230, and the LPA 222 of the second UE 220 may be connected to the second profile server 240. The first profile server 230 and the second profile server 240 may be identical to or different from each other. In addition, in case that one or more operator servers are included in the configuration, respective operator servers may be connected to separate profile servers, respectively, or at least one or more operator servers may be connected to the same profile server. Furthermore, although each of the profile servers 230 and 240 is illustrated in FIG. 2 as a single server; one or more profile servers (SM-DP+) may be included in the server configuration, depending on implementation and embodiments. It is to be noted that such various server configurations may be simplified and represented as a single profile server in the following drawings.

The first profile server 230 and the second profile server 240 may be connected to a first subscription mediation server (SM-DS 1) 260 and a second subscription mediation server (SM-DS 2) 270, respectively, which assist in establishing connections between the profile servers 230 and 240 and the UEs 210 and 220. In addition, the LPA 212 of the first UE 210 may be connected to the first subscription mediation server 260, and the LPA 222 of the second UE 220 may be connected to the second subscription mediation server 270. The first profile server 230 and the second profile server 240 may be identical to or different from each other, and the first subscription mediation server 260 and the second subscription mediation server 270 may be identical to or different from each other. Furthermore, although each of the subscription mediation servers 260 and 270 is illustrated in FIG. 2 as a single server; one or more subscription mediation servers (SM-DS) may be included in the server configuration, depending on implementation and embodiments. It is to be noted that such various server configurations may be simplified and represented as a single profile server in the following drawings.

The detailed operations and message exchange procedures of the user 200, the operator 250, the UEs 210 and 220, the eSIMs 211 and 221, the LPAs 212 and 222, the profile servers 230 and 240, and the subscription mediation servers 260 and 270 according to an embodiment of the disclosure will be described in detail with reference to the following drawings.

FIG. 3 is a diagram illustrating an example of the procedure between a first UE, a second UE, and a server for the second UE to download a profile according to an embodiment of the disclosure.

That is, FIG. 3 illustrates a procedure in which the first UE (existing UE, old device) 310 requests a device change for the profile installed in the first UE 310 to the second UE (new UE, new device) 320 through a profile server (SM-DP+) 330, the profile server 330 prepares a profile for the second UE 320, the first UE 310 receives profile download information of the profile prepared for the second UE 320 from the profile server 330, the first UE 310 transfers the profile download information to the second UE 320, and the second UE 320 downloads the profile prepared for profile transfer from the profile server 330.

In FIG. 3, the configuration and description of the user 300, the first UE 310, the second UE 320, the profile server 330, and the operator 340 are to be referenced from FIG. 2. For example, the user 300, the first UE 310, the second UE 320, the profile server 330, and the operator 340 illustrated in FIG. 3 may correspond to the user 200, the first UE 210, the second UE 220, the first profile server 230, and the operator 250 in FIG. 2, respectively.

Referring to FIG. 3, in step 3001, the user 300 may request the first UE 310 to transfer the first profile (profile 1). To this end, the user 300 may identify, through the first UE 310, information regarding the first profile (profile metadata) and information that the user intending to transfer the first profile should be aware of. The information regarding the first profile and the information that the user intending to transfer the first profile should be aware of may be stored in the first UE 310 or the first profile.

The information regarding the first profile may include, for example, the operator's name or logo, profile policy, and the like. The information that the user intending to transfer the first profile should be aware of may include, for example, the remaining number of profile transfers allowed by the operator or the cost the user must pay for the profile transfer. The first profile information may include content requiring the acquisition of information of the second UE 320 to which the profile is to be transferred. The information of the second UE 320 may optionally include at least one of the eUICC identifier installed in the second UE 320 and the type allocation code (TAC) of the second UE 320. In addition, the first UE 310 or the first profile may store at least one or more addresses of the profile server that the UE must connect to for profile transfer. The profile server that the UE must connect to for profile transfer may be, for example, the profile server 330.

In step 3003, the first UE 310 may acquire information of the second UE 320. The information of the second UE 320 may optionally include at least one of the eUICC identifier (EID) installed in the second UE 320 and the type allocation code (TAC) of the second UE 420.

In step 3005, the first UE 310 may establish a TLS connection with the profile server 330 which is to be accessed to transfer the profile (TLS establishment).

In step 3007, the first UE 310 may initiate a mutual authentication process with the profile server 330. The mutual authentication may be a certificate-based mutual authentication where the eSIM (or eUICC) of the first UE 310 and the subscription mediation server authenticate each other by using an asymmetric key configured by a pair of a public key (PK) and a secret key (SK). The mutual authentication initiation request may be sent by the first UE 310 to the profile server 330 by using the ES9+.InitiateAuthentication function. The mutual authentication initiation request may optionally include information (euiccInfo1) of the eSIM (not illustrated) installed in the first UE 310 or information (lpaRspCapability) of the LPA (not illustrated).

In step 3009, the profile server 330 may deliver a mutual authentication initiation response corresponding to the mutual authentication initiation request from the first UE 310 to the first UE 310. The mutual authentication initiation response may be an ES9.InitiateAuthentication response. The mutual authentication initiation response may include information (serverRspCapability or sessionContext) of the profile server 330. In addition, the information may include a signature (serverSigned1) generated by the profile server 330, the digital certificate of the profile server 330 which may be used to verify the same, the corresponding certificate chain, and the like.

In step 3011, the first UE 310 may request the profile server 330 to change the device of the first profile. The device change request may use the ES9+.AuthenticateClient function. The device change request may include at least one of the profile identifier (ICCID1) of the first profile, the eUICC identifier (EID2) installed in the second UE 320, or the type allocation code (TAC2) of the second UE 320. The profile identifier (ICCID1) of the first profile, the eUICC identifier (EID2) installed in the second UE 320, or the type allocation code (TAC2) of the second UE 320 may be included in data object ctxParamsForDeviceChange, and these values may include the signature of the eSIM (not illustrated) installed in the first UE 310, the digital certificate of the eSIM (not illustrated) which may be used to verify the same, and the corresponding certificate chain.

In step 3013, the profile server 330 may determine whether it is possible to change the device of the first profile as requested by the first UE (device change eligibility check). The profile server 330 may determine whether the device change is possible by using predefined configuration values or may optionally request the operator 340 to confirm whether it is possible to change the device of the first profile. The profile server 330 may request the operator 340 to confirm whether it is possible to change the device of the first profile as requested by the first UE 310 by using the ES2+.HandleDeviceChange function. The request to confirm whether the device change is possible may include the profile identifier (ICCID1) of the first profile, the eUICC identifier (EID2) installed in the second UE 320, or the type allocation code (TAC2) of the second UE 320. In addition, in step 3013, the operator 340 may send a response to the request to confirm whether the device change is possible to the profile server 330. The response regarding whether the device change is possible may be an ES2+.HandleDeviceChange response. Furthermore, in case that the device change is not possible, the operator 340 may reply to the profile server 330 with a value indicating an error or meaning that the device change is impossible.

In step 3015, the profile server 330 may optionally prepare a profile for the second UE 320. This step 3015 may be performed by the profile server 330 alone or in collaboration with the operator 340. In case that the preparation of the profile for the second UE 320 is done through collaboration between the profile server 330 and the operator 340, step 3015 may be performed using, for example, at least one of a download order (ES2+.DownloadOrder) message, a confirm order (ES2+.ConfirmOrder) message, a release order (ES2+.ReleaseOrder) message, or a handle notification process. Step 3015 may occur at any step of the embodiment in FIG. 3.

In step 3017, the profile server 330 may notify the first UE 310 whether the request to change the device of the first profile is allowed or not. The response indicating whether the request to change the device of the first profile is allowed or not may be an E29+.AuthenticateClient response. In addition, the response may optionally include a value (ccRequired) requesting the user 300 to input a device change confirmation code, or a service provider message for device change. The response may also include a signature generated by the profile server 330.

In step 3019, the first UE 310 may request the user 300 to confirm the transfer of the first profile and may receive the confirmation result input by the use (end user confirmation). Upon being requested to input a device change confirmation code in step 3017, the first UE 310 may request the user 300 to input the confirmation code and then receive the profile transfer confirmation code input thereby.

In step 3021, the first UE 310 may deliver the result of confirming the first profile transfer to the profile server 330. The result of confirming the first profile transfer may use the ES9+.ConfirmDeviceChange function. The result of confirming the first profile transfer may include at least one of a hash value of the device change confirmation code, a signature of the eSIM (not illustrated), and a transaction identifier (transaction ID). Upon receiving the confirmation result, the profile server 330 may identify the received confirmation result. In addition, in case that a device change confirmation code was requested in step 3017, the profile server 330 may compare and verify the hash value of the received device change confirmation code with the hash value of the device change confirmation code held thereby.

In step 3023, the profile server 330 may optionally prepare a profile for the second UE 320. This step 3023 may be performed by the profile server 330 alone or in collaboration with the operator 340. In case that the preparation of the profile for the second UE 320 is done through collaboration between the profile server 330 and the operator 340, step 3015 may be performed using, for example, at least one of a download order (ES2+.DownloadOrder) message, a confirm order (ES2+.ConfirmOrder) message, a release order (ES2+.ReleaseOrder) message, or a handle notification. In case that step 3015 was performed previously, the profile server 330 may not perform step 3023.

In step 3025, the profile server 330 may deliver a response regarding the result of confirming the first profile transfer to the first UE 310. The response regarding the result of confirming the first profile transfer may be an ES9+.ConfirmDeviceChange response. The response regarding the result of confirming the first profile transfer may include profile download information (ActivationCodeForDc, or activation code) of the profile prepared for the second UE 320 or an indicator indicating that the first profile needs to be deleted (deleteOldProfile). The profile download information may be encrypted and delivered in a state in which the same can be decrypted by the eSIM of the first UE 310.

Upon being requested to delete the profile in step 3025, the first UE 310 may request the user 300 to delete the first profile in step 3027. In addition, in case that profile download information was encrypted and delivered in step 3025, the first UE 310 may request the eSIM (not illustrated) of the first UE 310 to decrypt the profile download information. In this case, the eSIM may delete the first profile and then deliver the decrypted profile download information to the LPA (not illustrated) of the first UE 310.

In step 3029, for example, the first UE 310 may deliver the profile download information to the second UE 320. As an example of the first UE 310 delivering the profile download information to the second UE 320, the first UE 310 may convert the profile download information into an image form such as a QR code or into a string format, may display the same on the screen, and may notify the user 300 that the profile download information is ready. Depending on the embodiment, the user 300 may input the activation code displayed on the screen of the first UE 310 into the second UE 320. For example, in step 3029, the first UE 310 may directly deliver the profile download information to the second UE 320 through a wired connection, Wi-Fi, Bluetooth, NFC, or the like.

In step 3031, the second UE 320 may download the prepared profile from the profile server 330.

FIG. 4 is a sequence diagram illustrating a procedure according to an embodiment of the disclosure, in which the first UE requests the second UE to change the device of the profile installed in the first UE through a profile server, in case that a delay occurs in processing the device change request, the profile server notifies the first UE that the processing result will be delivered through a subscription mediation server, the profile server registers an event corresponding to the device change processing result in the subscription mediation server, and the first UE continues the device change process by using the corresponding information.

In FIG. 4, the configuration and description of the user 400, the first UE (existing UE, old device) 410, the second UE (new UE, new device) 420, the profile server (SM-DP+) 430, the subscription mediation server (SM-DS) 450, and the operator 440 are to be referenced from FIG. 2. For example, the user 400, the first UE 410, the second UE 420, the profile server 430, the subscription mediation server 450, and the operator 440 may correspond to the user 200, the first UE 210, the second UE 220, the first profile server 230, the first subscription mediation server 260, and the operator 250 in FIG. 2, respectively.

Referring to FIG. 4, in step 4001, the user 400 may request the first UE 410 to transfer the first profile. To this end, the user 400 may identify, through the first UE 410, information regarding the first profile (profile metadata) and information that the user intending to transfer the first profile should be aware of. The information regarding the first profile and the information that the user intending to transfer the first profile should be aware of may be stored in the first UE 410 or the first profile.

The information regarding the first profile may include, for example, the operator's name or logo, profile policy, and the like. The information that the user intending to transfer the first profile should be aware of may include, for example, the remaining number of profile transfers allowed by the operator or the cost the user must pay for the profile transfer. The first profile information may include content requiring the acquisition of information of the second UE 420 to which the profile is to be transferred. The information of the second UE 420 may optionally include at least one of the eUICC identifier installed in the second UE 420 and the type allocation code (TAC) of the second UE 420. In addition, the first UE 410 or the first profile may store at least one or more addresses of the profile server that the UE must connect to for profile transfer. The profile server that the UE must connect to for profile transfer may be, for example, the profile server 430.

In step 4003, the first UE 410 may acquire information of the second UE 420. The information of the second UE 420 may optionally include at least one of the eUICC identifier (EID) installed in the second UE 420 and the type allocation code (TAC) of the second UE 420.

In step 4005, the first UE 410 may establish a TLS connection with the profile server 430 which is to be accessed to transfer the profile (TLS establishment).

In step 4007, the first UE 410 may initiate a mutual authentication process with the profile server 430. The mutual authentication may be a certificate-based mutual authentication where the eSIM (or eUICC) of the first UE 410 and the subscription mediation server 450 authenticate each other by using an asymmetric key configured by a pair of a public key (PK) and a secret key (SK). The mutual authentication initiation request may be sent by the first UE 410 to the profile server 330 by using the ES9+.InitiateAuthentication function. The mutual authentication initiation request may optionally include information (euiccInfo1) of the eSIM (not illustrated) installed in the first UE 410 or information (lpaRspCapability) of the LPA (not illustrated). In addition, depending on the embodiment, the mutual authentication initiation request may optionally include information of the subscription mediation server supported by the first UE 410. The information of the subscription mediation server supported by the first UE 410 may include the FQDN of at least one subscription mediation server address. The subscription mediation server address may be the address of the subscription mediation server 450. Furthermore, depending on the embodiment, the mutual authentication initiation request may optionally include an identifier (information) indicating whether the first UE 410 supports the processing status check function of the profile server 430. The processing status check function of the profile server 430 may be the ES9+.CheckProgress function. The information of the subscription mediation server 450 supported by the first UE 410 and the identifier for supporting the processing status check function of the profile server 430 may be included in information (euiccInfo1) of the eSIM (not illustrated) installed in the first UE 410 or information (lpaRspCapability) of the LPA (not illustrated) or, when the mutual authentication initiation request is made, may be included in the mutual authentication initiation request separately from information (euiccInfo1) of the eSIM (not illustrated) or information (lpaRspCapability) of the LPA (not illustrated) and delivered to the profile server 430.

In step 4009, the profile server 430 may deliver a mutual authentication initiation response corresponding to the mutual authentication initiation request of the first UE 410 to the first UE 410. The mutual authentication initiation response may be an ES9.InitiateAuthentication response. The mutual authentication initiation response may include information (serverRspCapability or sessionContext) of the profile server 430. In addition, the mutual authentication initiation response may include a signature generated by the profile server 430, the digital certificate of the profile server 430 which may be used to verify the same, the corresponding certificate chain, and the like. Furthermore, the mutual authentication initiation response may optionally include at least one of the following pieces of information:
- The address or FQDN of one or more subscription mediation servers supported by the profile server 430
- The address or FQDN of one or more subscription mediation servers simultaneously supported by the profile server 430 and the first UE 410
- An identifier indicating support for the processing status check function of the profile server 430

The above information may be included in the profile server's information (serverRspCapability or sessionContext) or included in the mutual authentication initiation response separately from the profile server's information (serverRspCapability or sessionContext) and delivered to the first UE 410.

In step 4011, the first UE 410 may request the profile server 430 to change the device of the first profile. The device change request may use the ES9+.AuthenticateClient function. The device change request may include at least one of the profile identifier (ICCID1) of the first profile, the eUICC identifier (EID2) installed in the second UE 420, or the type allocation code (TAC2) of the second UE 320. The profile identifier (ICCID1) of the first profile, the eUICC identifier (EID2) installed in the second UE 420, or the type allocation code (TAC2) of the second UE 420 may be included in data object ctxParamsForDeviceChange, and these values may include the signature of the eSIM (not illustrated) installed in the first UE 310, the digital certificate of the eSIM (not illustrated) which may be used to verify the same, and the corresponding certificate chain. Furthermore, the device change request may optionally include at least one of the following pieces of information:
- The address or FQDN of one or more subscription mediation servers supported by the first UE 410
- The address or FQDN of one or more subscription mediation servers simultaneously supported by the profile server 430 and the first UE 410
- An identifier indicating support for the processing status check function of the profile server

The above information may be included in data object ctxParamsForDeviceChange or included in the device change request separately from data object ctxParamsForDeviceChange and delivered to the profile server 430.

In step 4013, the profile server 430 may determine that the processing of the device change request made by the first UE 410 could be delayed (determine whether it need more time to process the requested device change). Referring to steps 3013 and 3015 of FIG. 3, a delay in processing the device change request may occur in case that interworking with the operator 440 is temporarily unavailable, or in case that additional operations and time are required to prepare a profile for the second UE 420. In case that a delay in processing the device change request occurs, the profile server 430 may decide on a method to respond to the first UE 410 with the device change request processing result. This decision may be based on the subscription mediation server information received from the first UE 410 in steps 4007 to 4011, the identifier for supporting the processing status check function of the profile server 430, and whether the subscription mediation server supported by the profile server 430 or the profile server supports the processing status check function. In case that there is a subscription mediation server commonly supported by the first UE 410 and the profile server 430 (If the SM-DP+ can use one of SM-DS address(es) provided by the old device to notify the device change progress), the profile server 430 may decide to deliver the device change request processing result to the first UE 410 through the subscription mediation server 450.

In step 4015, the profile server 430 may notify the first UE 410 that the processing of the request to change the device of the first profile is delayed. The response to the delay in processing the request to change the device of the first profile may be an ES9+AuthenticateClient response. In addition, the response may optionally include one of the following pieces of information:
- Transaction ID
   : A session identifier shared between the first UE 410 and the profile server 430 related to the ongoing device change processing
- A profile server processing status check use indicator (checkProgessFlag)
   : An instruction for the first UE 410 to request the profile server 430 to check the processing status
- A profile server processing check timepoint (retryDelay)
   : A timepoint at which the first UE 410 should request a profile server processing status check
- The device change processing result delivery subscription mediation server address (smdsAddress)
   : The address of the subscription mediation server 450 where the profile server 430 will register the device change processing result
- A device change session identifier (dcSessionId)

Furthermore, the response may include a signature generated by the profile server 430.

In step 4017, the first UE 510 may deliver the response of the profile server 430 received in step 4015 to the eSIM (not illustrated) of the first UE 410 and may verify the signature. In addition, in case that the verification succeeds, the eSIM (not illustrated) of the first UE 410 may terminate the current session (for example, RSP session) with the profile server 430. The LPA (not illustrated) of the first UE 410 may store the identifier (ICCID1) of the first profile requested in step 4011. Furthermore, the LPA (not illustrated) of the first UE 410 may optionally store the identifier (ICCID1) of the first profile requested in step 4011 by linking the same with the transaction ID or device change session identifier (dcSessionId) received in step 4015.

In step 4019, the profile server 430 may determine whether it is possible to process the device change of the first profile as requested by the first UE 410 (device change eligibility check). In addition, the profile server 330 may optionally prepare a profile for the second UE 420. This step 4019 may be performed concurrently with steps 4013, 4015, and 4017, and reference may be made to steps 3013 and 3015 in FIG. 3, with detailed descriptions thereof omitted.

In step 4021, the profile server 430 may register the result of processing the device change request of the first UE 410 in the subscription mediation server 450. The device change request processing result registration (subscription) request may use the ES12+.RegisterEvent function. The device change request processing result registration request may optionally include one or more of the following pieces of information:
- The eUICC identifier (EID) of the first UE 410
- The address of the profile server 430
- The event ID
- the event type

The event ID may include at least one or more of the following:
- The transaction ID delivered by the profile server 430 to the first UE 410 in step 4015
- The device change session identifier delivered by the profile server 430 to the first UE 410 in step 4015
- the profile identifier (ICCID1) for which the device change request was processed
- The hash value of the profile identifier (ICCID1) for which the device change request was processed

The event type may be information indicating the device change request processing result, expressed as an integer value. For example, the same may be represented as 1: Profile Download, 2: RPM, 3: Device Change, etc.

In step 4023, the first UE 410 may request an event from the subscription mediation server 450 and, if there is an event registered for the eUICC identifier (EID1) corresponding to the eSIM (not illustrated) of the first UE 410, may receive related information from the subscription mediation server 450 (polling). Alternatively, if the subscription mediation server 450 has an event registered for the eUICC identifier (EID1) corresponding to the eSIM (not illustrated) of the first UE 410, the subscription mediation server 450 may deliver the related information to the first UE 410 (push). The related information may include at least one or more of the following pieces of information:
- The address of the profile server 430
- The event identifier
- The event type

In addition, the subscription mediation server 450 may include, along with the aforementioned information, a signature generated by the subscription mediation server 450, the digital certificate of the subscription mediation server 450 which may be used to verify the same, and the corresponding certificate chain.

In step 4025, the first UE 410 may verify the information acquired from the subscription mediation server 450 through the eSIM of the first UE 410. In addition, in case that the event identifier delivered in step 4023 indicates the device change request processing result, one or more of the following operations may be performed:
- Comparing whether the transaction ID delivered by the profile server 430 to the first UE 410 in step 4015 matches the event identifier
- Comparing whether the device change session identifier delivered by the profile server 430 to the first UE 410 in step 4015 matches the event identifier
- Comparing whether the profile identifier (ICCID1) for which the device change request was previously processed matches the event identifier
- Comparing whether the hash value of the profile identifier (ICCID1) for which the device change request was previously processed matches the event identifier

In case that the event identifier matches the specific value in the aforementioned comparison operations, the first UE 410 may determine that the device change processing of the previously requested profile, such as the first profile, has been completed.

In step 4027, the first UE 410 may continue the device change process for the first profile. Step 4027 may include steps 4001, 4003, 4005, 4007, 4009, 4011 or steps 3001, 3003, 3005, 3007, 3009, 3011, 3013, 3015 in FIG. 3. However, steps 4001, 4003 or 3001, 3005 may not be performed in step 4027.

In step 4029, the profile server 430 may notify the first UE 410 whether the request to change the device of the first profile is allowed or not. Step 4029 may reference step 3017 in FIG. 3, and thereafter, steps 3019, 3021, 3023, 3025, 3027, 3029, 3031 in FIG. 3 may be performed with the user 400, the first UE 410, the second UE 420, the profile server 430, and the operator 440.

FIG. 5 is a sequence diagram illustrating a procedure according to an embodiment of the disclosure, in which the first UE requests the second UE to change the device of the profile installed in the first UE through a profile server, in case that a delay occurs in processing the device change request, the first UE checks the processing progress with the profile server, and upon completion of processing, the first UE continues the device change process.

In FIG. 5, the configurations and descriptions regarding the user 500, the first UE (existing UE, old device) 510, the second UE (new UE, new device) 520, the profile server (SM-DP+) 530, and the operator 540 are referred to FIG. 2. For example, the user 500, the first UE 510, the second UE 520, the profile server 530, and the operator 540 may correspond to the user 200, the first UE 210, the second UE 220, the first profile server 230, and the operator 250 in FIG. 2, respectively.

Referring to FIG. 5, in step 5001, the user 500 may request the first UE 510 to transfer the first profile. Step 5001 may reference step 4001 in FIG. 4.

In step 5003, the first UE 510 may acquire information of the second UE 520. Step 5003 may reference step 4003 in FIG. 4.

In step 5005, the first UE 510 may establish a TLS connection with the profile server 530 which is to be accessed to transfer the profile (TLS establishment).

In step 5007, the first UE 510 may initiate a mutual authentication process with the profile server 530. Step 5007 may reference step 4007 in FIG. 4.

In step 5009, the profile server 530 may deliver a mutual authentication initiation response to the first UE 510 in response to the mutual authentication initiation request from the first UE 510. Step 5009 may reference step 4009 in FIG. 4.

In step 5011, the first UE 510 may request the profile server 530 to change the device of the first profile. Step 5011 may reference step 4011 in FIG. 4.

In step 5013, the profile server 530 may determine that the processing of the device change request made by the first UE 510 could be delayed. Referring to steps 3013 and 3015 in FIG. 3, a delay in processing the device change request may occur in case that interworking with the operator 540 is temporarily unavailable, or in case that additional operations and time are required to prepare a profile for the second UE 520. In case that a delay in processing the device change request occurs, the profile server 530 may decide on a method to respond to the first UE 510 with the device change request processing result. This decision may be based on the subscription mediation server information received from the first UE 510 in steps 5007 to 5011, the identifier for supporting the processing status check function of the profile server 530, and whether the subscription mediation server supported by the profile server 530 or the profile server 530 supports the processing status check function. In case that there is no subscription mediation server commonly supported by the first UE 510 and the profile server 530, and in case that the first UE 510 and profile server 530 mutually support the profile server's processing status check function (if the SM-DP+ and the device support SM-DP+ check process feature (or DS is not supported)), the profile server 530 may determine that the first UE 510 should check the device change request processing result through the processing status check function of the profile server 530.

In step 5015, the profile server 530 may notify the first UE 510 that the processing of the request to change the device of the first profile is delayed. The response to the delay in processing the request to change the device of the first profile may be an ES9+AuthenticateClient response. In addition, the response may optionally include one of the following pieces of information:
- Transaction ID
   : A session identifier shared between the first UE 510 and the profile server 530 related to the ongoing device change processing
- A profile server processing status check use indicator (checkProgessFlag)
   : An instruction for the first UE 510 to request the profile server 530 to check the profile server processing status
- A profile server processing check timepoint (retryDelay)
   : A timepoint at which the first UE 510 should request a profile server processing status check
- A device change session identifier (dcSessionId)

Furthermore, the response may include a signature generated by the profile server 530.

In step 5017, the first UE 510 may deliver the response of the profile server 530 received in step 5015 to the eSIM (not illustrated) of the first UE 510 and may verify the signature. In addition, in case that the verification succeeds, the eSIM (not illustrated) of the first UE 510 may terminate the current session (for example, RSP session) with the profile server 530. The LPA (not illustrated) of the first UE 510 may store the identifier (ICCID1) of the first profile requested in step 5011. Furthermore, the LPA (not illustrated) of the first UE 510 may optionally store the identifier (ICCID1) of the first profile requested in step 5011 by linking the same with the transaction ID or device change session identifier (dcSessionId) received in step 5015.

In step 5019, the first UE 510 may request the profile server 530 to check the profile server processing status. The profile server processing status check request may use the ES9+.CheckProgress function. In addition, the request may include the transaction ID or device change session identifier received from the profile server 530 in step 5015. Furthermore, the request may be made after the profile server processing status check timepoint received from the profile server 510 in step 5015 has elapsed. Upon receiving the request, the profile server 530 may confirm that the device change request associated with the transaction ID or device change session identifier has been processed, and if processed, may return a normal (OK) or true value to the first UE 510, or if not processed, may return an error or false value thereto.

In step 5021, the profile server 530 may determine whether it is possible to process the device change of the first profile as requested by the first UE 510 (device change eligibility check). In addition, the profile server 530 may optionally prepare a profile for the second UE 520. This step 5021 may be performed concurrently with steps 5013, 5015, 5017, and 5019, and may reference steps 3013 and 3015 in FIG. 3.

In step 5023, the first UE 510 may request the profile server 530 to check the profile server processing status. The profile server processing status check request may use the ES9+.CheckProgress function. In addition, the request may include the transaction ID or device change session identifier received from the profile server 530 in step 5015. Furthermore, the request may be made after the profile server processing status check timepoint received from the profile server 510 in step 5015 has elapsed, following the execution of step 5019. Upon receiving the request, the profile server 530 may confirm that the device change request associated with the transaction ID or device change session identifier has been processed, and if processed, may return a normal (OK) or true value to the first UE 510, or if not processed, may return an error or false value thereto. In this embodiment, it is assumed that the device change request processing is completed after step 5021, and in step 5023, the profile server 530 returns a normal (OK) or true value. Since the first UE 510 receives a normal (OK) or true value in step 5023, the first UE 510 may determine that processing of the request to change the device of the first profile associated with the transaction ID or device change session identifier delivered in step 5023 has been completed.

In step 5025, the first UE 510 may continue the process of changing the device of the first profile. Step 5025 may reference steps 5001, 5003, 5005, 5007, 5009, 5011 or steps 3001, 3003, 3005, 3007, 3009, 3011, 3013, 3015 in FIG. 3. However, steps 3001, 3003 or 5001, 5003 may not be performed.

In step 5027, the profile server 530 may notify the first UE 510 whether the request to change the device of the first profile is allowed or not. Step 5027 may reference step 3017 in FIG. 3, and thereafter, steps 3019, 3021, 3023, 3025, 3027, 3029, 3031 in FIG. 3 may be performed with the user 500, the first UE 510, the second UE 520, the profile server 530, and the operator 540.

FIG. 6A and FIG. 6B are sequence diagrams illustrating a procedure according to an embodiment of the disclosure, in which during a process of the first UE conducting a device change of a profile installed in the first UE to the second UE through a profile server, in case that a delay occurs while the profile server receives and processes the confirmation result regarding the profile transfer requested by the first UE, the profile server notifies the first UE that the processing result will be delivered through the subscription mediation server, the profile server registers an event corresponding to the device change processing result in the subscription mediation server, and the first UE continues the device change process by using the corresponding information.

In FIG. 6A and FIG. 6B, the configurations and descriptions regarding the user 600, the first UE (existing UE, old device) 610, the second UE (new UE, new device) 620, the profile server (SM-DP+) 630, the subscription mediation server (SM-DS) 650, and the operator 640 are referred to FIG. 2. For example, the user 600, the first UE 610, the second UE 620, the profile server 630, the subscription mediation server 650, and the operator 640 may correspond to the user 200, the first UE 210, the second UE 220, the first profile server 230, the first subscription mediation server 260, and the operator 250 in FIG. 2, respectively.

Referring to FIG. 6A and FIG. 6B, in step 6001, the user 600 may request the first UE 610 to transfer the first profile. Step 6001 may reference step 4001 in FIG. 4.

In step 6003, the first UE 610 may acquire information of the second UE 620. Step 6003 may reference step 4003 in FIG. 4.

In step 6005, the first UE 610 may establish a TLS connection with the profile server 630 which is to be accessed to transfer the profile (TLS establishment).

In step 6007, the first UE 610 may initiate a mutual authentication process with the profile server 630. Step 6007 may reference step 4007 in FIG. 4.

In step 6009, the profile server 630 may deliver a mutual authentication initiation response to the first UE 610 in response to the mutual authentication initiation request of the first UE 610. Step 6009 may reference step 4009 in FIG. 4.

In step 6011, the first UE 610 may request the profile server 630 to change the device of the first profile. Step 6011 may reference step 4011 in FIG. 4.

In step 6013, the profile server 630 may determine whether it is possible to process the device change of the first profile as requested by the first UE 610 (device change eligibility check). In addition, the profile server 630 may optionally prepare a profile for the second UE 620. This step 6013 may reference steps 3013 and 3015 in FIG. 3.

In step 6015, the profile server 630 may notify the first UE 610 whether the request to change the device of the first profile is allowed or not. Step 6015 may reference step 3017 in FIG. 3.

In step 6017, the first UE 610 may request the user 600 to confirm the transfer of the first profile and may receive the confirmation result input from the user 600. Step 6017 may reference step 3019 in FIG. 3.

In step 6019, the first UE 610 may deliver the confirmation result regarding the first profile transfer to the profile server 630. Step 6019 may reference step 3021 in FIG. 3.

In step 6021, the profile server 630 may determine that the processing of the confirmation result regarding the first profile transfer delivered by the first UE 610 could be delayed (determine whether it need more time to process the requested device change). Referring to step 3023 in FIG. 3, a delay in processing the confirmation result regarding the first profile transfer may occur in case that interworking with the operator 640 is temporarily unavailable, or in case that additional operations and time are required to prepare a profile for the second UE 620. In case that a delay in processing the confirmation result regarding the first profile transfer occurs, the profile server 630 may decide on a method to respond to the first UE 610 with the result of processing the confirmation result regarding the first profile transfer. This decision may be based on the subscription mediation server information received from the first UE 610 in steps 6007 to 6011, the identifier for supporting the processing status check function of the profile server 630, and whether the subscription mediation server supported by the profile server 630 or the profile server 630 supports the processing status check function. In case that there is a subscription mediation server 650 commonly supported by the first UE 610 and the profile server 630 (If the SM-DP+ can use one of SM-DS address(es) provided by the old device to notify the device change progress), the profile server 630 may decide to deliver the result of processing the confirmation result regarding the first profile transfer to the first UE 610 through the subscription mediation server 650.

In step 6023, the profile server 630 may notify the first UE 610 that the processing of the confirmation result regarding the first profile transfer is delayed. The response to the delay in processing the confirmation result regarding the first profile transfer may be an ES9+.ConfirmDeviceChange response. In addition, the response may optionally include one of the following pieces of information:
- Transaction ID
   : A session identifier shared between the first UE 610 and the profile server 630 related to the ongoing device change processing
- A profile server processing status check use indicator (checkProgessFlag)
   : An instruction for the first UE 610 to request the profile server 630 to check the profile server processing status
- A profile server processing check timepoint (retryDelay)
   : A timepoint at which the first UE 610 should request a profile server processing status check
- A device change processing result delivery subscription mediation server address (smdsAddress)
   : the address of the subscription mediation server 650 in which the device change processing result is to be registered by the profile server 630
- A device change session identifier (dcSessionId)

Furthermore, the response may include a signature generated by the profile server 630.

In step 6025, the first UE 610 may deliver the response of the profile server 630 received in step 6023 to the eSIM (not illustrated) of the first UE 610 and may verify the signature. In addition, in case that the verification succeeds, the eSIM (not illustrated) of the first UE 610 may terminate the current session (for example, RSP session) with the profile server 630. The LPA (not illustrated) of the first UE 610 may store the identifier (ICCID1) of the first profile requested in step 6011. Furthermore, the LPA (not illustrated) of the first UE 610 may optionally store the identifier (ICCID1) of the first profile requested in step 6011 by linking the same with the transaction ID or device change session identifier (dcSessionId) received in step 6023.

In step 6027, the profile server 630 may optionally prepare a profile for the second UE 620. This step 6027 may be performed concurrently with steps 6021, 6023, and 6025, and may reference step 3023 in FIG. 3.

In step 6029, the profile server 630 may register the result of processing the confirmation result regarding the first profile transfer of the first UE 610 in the subscription mediation server 650. The request to register the result of processing the confirmation result regarding the first profile transfer may use the ES12+.RegisterEvent function. The request to register the result of processing the confirmation result regarding the first profile transfer may optionally include one or more of the following pieces of information:
- The eUICC identifier (EID) of the first UE
- The address of the profile server 610
- The event ID
- the event type

The event ID may include at least one or more of the following:
- The transaction ID delivered by the profile server 630 to the first UE 610 in step 6023
- The device change session identifier delivered by the profile server 630 to the first UE 610 in step 6023
- the profile identifier (ICCID1) for which the device change request was processed
- The hash value of the profile identifier (ICCID1) for which the device change request was processed

The event type may be information indicating the result of processing the confirmation result regarding the first profile transfer, expressed as an integer value. For example, the same may be represented as 1: Profile Download, 2: RPM, 3: Device Change, etc.

In step 6031, the first UE 610 may request an event from the subscription mediation server 650 and, if there is an event registered for the eUICC identifier (EID1) corresponding to the eSIM (not illustrated) of the first UE 610, may receive related information from the subscription mediation server 650 (polling). Alternatively, if the subscription mediation server 650 has an event registered for the eUICC identifier (EID1) corresponding to the eSIM (not illustrated) of the first UE 610, the subscription mediation server 650 may deliver the related information to the first UE 610 (push). The related information may include at least one or more of the following pieces of information:
- The address of the profile server 630
- The event identifier
- The event type

In addition, the subscription mediation server 650 may include, along with the aforementioned information, a signature generated by the subscription mediation server 650, the digital certificate of the subscription mediation server 650 which may be used to verify the same, and the corresponding certificate chain.

In step 6033, the first UE 610 may verify the information acquired from the subscription mediation server 650 through the eSIM of the first UE 610. In addition, in case that the event identifier delivered in step 6063 indicates the device change request processing result, one or more of the following operations may be performed:
- Comparing whether the transaction ID delivered by the profile server 630 to the first UE 610 in step 6023 matches the event identifier
- Comparing whether the device change session identifier delivered by the profile server 630 to the first UE 610 in step 6023 matches the event identifier
- Comparing whether the profile identifier (ICCID1) for which the device change request was previously processed matches the event identifier
- Comparing whether the hash value of the profile identifier (ICCID1) for which the device change request was previously processed matches the event identifier

In case that the event identifier matches the specific value in the aforementioned comparison operations, the first UE 610 may determine that processing of the result of confirming the transfer of the previously device-change-requested profile (for example, first profile) has been completed.

In step 6035, the first UE 610 may continue the device change process for the first profile. Step 6035 may reference steps 6001, 6003, 6005, 6007, 6009, 6011, 6013, 6015, 6017, and 6019 or steps 3001, 3003, 3005, 3007, 3009, 3011, 3013, 3015, 3017, 3019, 3021, and 3023 in FIG. 3. However, operations of steps 6001, 6003, and 6013 or 3001, 3003, 3013, 3015, and 3023 may not be performed in step 6035.

In step 6035, in case that the profile server 630 has successfully performed a comparison verification of the hash value of the device change confirmation code received in step 6019 or step 3021 with the hash value of the device change confirmation code held thereby, the value (ccRequired) requesting input of the device change confirmation code may not be included in steps 3017 to 6015 performed in step 6035. In addition, step 3019 or step 6017 may not be performed in step 6035, and step 3021 or step 6019 may not include the hash value of the device change confirmation code, or the user 600 may generate a hash value by using the device change confirmation code input in the previously performed step 3019 or step 6017 and may deliver the same to the profile server 630 while including the hash value of the device change confirmation code. Furthermore, in case that step 3021 or step 6019 is performed in step 6035, the profile server 630 may not perform a comparison verification of the device change confirmation code hash value.

In step 6037, the profile server 630 may deliver a response regarding the confirmation result regarding the first profile transfer to the first UE 610. Step 6037 may reference step 3025 in FIG. 3. Thereafter, steps 3027, 3029 and 3031 in FIG. 3 may be performed with the user 600, the first UE 610, the second UE 620, the profile server 630, and the operator 640.

FIG. 7 is a sequence diagram illustrating a procedure according to an embodiment of the disclosure, in which during a process of the first UE conducting a device change of a profile installed in the first UE to the second UE through a profile server, in case that a delay occurs while the profile server receives and processes the confirmation result regarding the profile transfer requested by the first UE, the second UE checks the processing result from the profile server and, if the processing is completed, continues the device change process.

In FIG. 7, the configurations and descriptions regarding the user 700, the first UE (existing UE, old device) 710, the second UE (new UE, new device) 720, the profile server (SM-DP+) 730, the subscription mediation server (SM-DS) 750, and the operator 740 are referred to FIG. 2. For example, the user 700, the first UE 710, the second UE 720, the profile server 730, the subscription mediation server 750, and the operator 740 may correspond to the user 200, the first UE 210, the second UE 220, the first profile server 230, the first subscription mediation server 260, and the operator 250 in FIG. 2, respectively.

Referring to FIG. 7, in step 7001, the user 700 may request the first UE 710 to transfer the first profile. Step 7001 may reference step 7001 in FIG. 4.

In step 7003, the first UE 710 may acquire information of the second UE 720. Step 6003 may reference step 4003 in FIG. 4. In addition, the information of the second UE 720 acquired by the first UE 710 in step 7003 may further include information of the subscription mediation server supported by the second UE 720. The information of the subscription mediation server supported by the second UE 720 may include the FQDN of at least one or more subscription mediation server addresses. The subscription mediation server address may be the address of the subscription mediation server 750.

In step 7005, the first UE 710 may establish a TLS connection with the profile server 730 which is to be accessed to transfer the profile (TLS establishment).

In step 7007, the first UE 710 may initiate a mutual authentication process with the profile server 730. Step 7007 may reference step 4007 in FIG. 4.

In step 7009, the profile server 730 may deliver a mutual authentication initiation response corresponding to the mutual authentication initiation request of the first UE 710 to the first UE7410. Step 7009 may reference step 4009 in FIG. 4.

In step 7011, the first UE 710 may request the profile server 730 to change the device of the first profile. Step 7011 may reference step 4011 in FIG. 4. In addition, the device change request in step 7011 may optionally include information of the subscription mediation server supported by the second UE 720. The information of the subscription mediation server supported by the second UE 720 may include the FQDN of at least one or more subscription mediation server addresses. The subscription mediation server address may be the address of the subscription mediation server 750.

In step 7013, the profile server 730 may determine whether it is possible to process the device change of the first profile as requested by the first UE 610 (device change eligibility check). In addition, the profile server 730 may optionally prepare a profile for the second UE 620. This step 7013 may reference steps 3013 and 3015 in FIG. 3.

In step 7015, the profile server 730 may notify the first UE 710 whether the request to change the device of the first profile is allowed or not. Step 7015 may reference step 3017 in FIG. 3.

In step 7017, the first UE 710 may request the user 700 to confirm the transfer of the first profile and may receive the confirmation result input from the user 700. Step 7017 may reference step 3019 in FIG. 3.

In step 7019, the first UE 710 may deliver the confirmation result regarding the first profile transfer to the profile server 730. Step 7019 may reference step 3021 in FIG. 3.

In step 7021, the profile server 730 may determine that the processing of the confirmation result regarding the first profile transfer delivered by the first UE 710 could be delayed (determine whether it need more time to process the requested device change). Referring to step 3023 in FIG. 3, a delay in processing the confirmation result regarding the first profile transfer may occur in case that interworking with the operator 740 is temporarily unavailable, or in case that additional operations and time are required to prepare a profile for the second UE 720. In case that a delay in processing the confirmation result regarding the first profile transfer is expected to occur, and in case that the first profile does not need to be deleted, the profile server 730 may decide on a method to deliver profile downlink information of the profile for the second UE 720 to the second UE 720 through the subscription mediation server 750 later. The decision may be based on information of the subscription mediation server supported by the second UE 720, received from the first UE 710 in step 7011, and the subscription mediation server 750 supported by the profile server 730. In case that there is a subscription mediation server 750 commonly supported by the second UE 710 and the profile server 730 (If the SM-DP+ can use one of SM-DS address(es) provided by the new device to notify the device change progress), the profile server 730 may decide to deliver the profile downlink information of the profile for the second UE 720 to the second UE 720 through the subscription mediation server 750 later. In addition, the case of this embodiment may be applied to a case in which it is unnecessary to delete the existing profile (first profile) from the first UE 710 in (if the deletion of the old profile is not necessary).

In step 7023, the processing of the confirmation result regarding the first profile transfer may be delayed, and the profile server 730 may notify the first UE 710 of the profile downlink information of the profile for the second UE 720 through the subscription mediation server 750 later. The response may be an ES9+.ConfirmDeviceChange response. In addition, the response may optionally include one of the following pieces of information:
- Transaction ID
   : A session identifier shared between the first UE 710 and the profile server 730 related to the ongoing device change processing
- The address of the subscription mediation server 750 in which the profile downlink information for the second UE 720 is to be registered
- An indicator (smdsFlag) indicating that the profile downlink information for the second UE 720 is to be registered in the subscription mediation server 750

Furthermore, the response may include a signature generated by the profile server 730.

In step 7025, the first UE 710 may deliver the response of the server, received in step 7023, to the eSIM (not illustrated) of the first UE 710 and may verify the signature. In addition, in case that the verification succeeds, the eSIM (not illustrated) of the first UE 710 may terminate the current session (for example, RSP session) with the profile server 730. The LPA (not illustrated) of the first UE 710 may confirm completion of the first profile device change requested in step 7011 and may terminate the device change process.

In step 7027, the profile server 730 may optionally prepare a profile for the second UE 720. This step 7027 may be performed concurrently with steps 7021, 7023, and 7025, and may reference step 3023 in FIG. 3.

In step 7027, the profile server 730 may register the profile downlink information for the second UE 720 in the subscription mediation server 750. The request to register the profile downlink information for the second UE 720 may use the ES12+.RegisterEvent function. The registration (subscription) request may optionally include one or more of the following pieces of information:
- The eUICC identifier (EID2) of the second UE
- The address of the profile server 710
- The event ID
- The event type

The event type may be a value expressed as an integer, and may be expressed, for example, as 1: Profile Download, 2: RPM, 3: Device Change, etc. In this embodiment, 1: Profile Download may be configured.

In step 7031, for example, the first UE 710 may optionally deliver, to the second UE 720, the address of the subscription mediation server 750 in which the profile download information for the second UE 720 will be registered. As an example of the first UE 310 delivering the address of the subscription mediation server 750 in which the profile download information for the second UE 720 will be registered to the second UE 320, the first UE 710 may convert the address of the subscription mediation server 750 into an image form such as a QR code or into a string format, may display the same on the screen, and may notify the user 700. The user 700 may input the address of the subscription mediation server 750 from the screen of the first UE 710 into the second UE 720. For example, in step 7031, the first UE 710 may also directly deliver the profile download information to the second UE 720 through a connection such as wired connection, Wi-Fi, Bluetooth, or NFC.

In step 7033, the second UE 720 may request an event from the subscription mediation server 750 and, if there is an event registered for the eUICC identifier (EID2) corresponding to the eSIM (not illustrated) of the first UE 710, may receive related information from the subscription mediation server 750 (polling). Alternatively, if the subscription mediation server 750 has an event registered for the eUICC identifier (EID1) corresponding to the eSIM (not illustrated) of the second UE 720, the subscription mediation server 750 may deliver the related information to the second UE 720 (push). The related information may include at least one or more of the following pieces of information:
- The address of the profile server 730
- The event identifier
- The event type

In addition, the subscription mediation server 750 may include, along with the aforementioned information, a signature generated by the subscription mediation server 750, the digital certificate of the subscription mediation server 750 which may be used to verify the same, and the corresponding certificate chain.

In step 7035, the second UE 720 may download the prepared profile from the profile server 730.

FIG. 8A and FIG. 8B are sequence diagrams illustrating a procedure according to an embodiment of the disclosure, in which during a process of the first UE conducting a device change of a profile installed in the first UE to the second UE through a profile server, in case that a delay occurs while the profile server receives and processes the confirmation result regarding the profile transfer requested by the first UE, the first UE checks the processing progress with the profile server, and upon completion of processing, the first UE continues the device change process.

In FIG. 8A and FIG. 8B, the configurations and descriptions regarding the user 800, the first UE (existing UE, old device) 810, the second UE (new UE, new device) 820, the profile server (SM-DP+) 830, and the operator 840 are referred to FIG. 2. For example, the user 800, the first UE 810, the second UE 820, the profile server 830, and the operator 840 may correspond to the user 200, the first UE 210, the second UE 220, the first profile server 230, and the operator 250 in FIG. 2, respectively.

Referring to FIG. 8A and FIG. 8B, in step 8001, the user 800 may request the first UE 810 to transfer the first profile. Step 8001 may reference step 4001 in FIG. 4.

In step 8003, the first UE 810 may acquire information of the second UE 820. Step 8003 may reference step 4003 in FIG. 4.

In step 8005, the first UE 810 may establish a TLS connection with the profile server 830 which is to be accessed to transfer the profile (TLS establishment).

In step 8007, the first UE 810 may initiate a mutual authentication process with the profile server 830. Step 8007 may reference step 4007 in FIG. 4.

In step 8009, the profile server 830 may deliver a mutual authentication initiation response corresponding to the mutual authentication initiation request of the first UE 810 to the first UE 810. Step 8009 may reference step 4009 in FIG. 4.

In step 8011, the first UE 810 may request the profile server 830 to change the device of the first profile. Step 8011 may reference step 4011 in FIG. 4.

In step 8013, the profile server 830 may determine whether it is possible to process the device change of the first profile as requested by the first UE 810 (device change eligibility check). In addition, the profile server 830 may optionally prepare a profile for the second UE 820. This step 5021 may reference steps 3013 and 3015 in FIG. 3.

In step 8015, the profile server 830 may notify the first UE 810 whether the request to change the device of the first profile is allowed or not. Step 8015 may reference step 3017 in FIG. 3.

In step 8017, the first UE 810 may request the user 800 to confirm the transfer of the first profile and may receive the confirmation result input therefrom. Step 8017 may reference step 3019 in FIG. 3.

In step 8019, the first UE 810 may deliver the confirmation result regarding the first profile transfer to the profile server 830. Step 8019 may reference step 3021 in FIG. 3.

In step 8021, the profile server 830 may determine that the processing of the confirmation result regarding the first profile transfer delivered by the first UE 810 could be delayed (determine whether it need more time to process the requested device change). Referring to step 3023 in FIG. 3, a delay in processing the confirmation result regarding the first profile transfer may occur in case that interworking with the operator 840 is temporarily unavailable, or in case that additional operations and time are required to prepare a profile for the second UE 820. In case that a delay in processing the confirmation result regarding the first profile transfer occurs, the profile server 830 may decide on a method to deliver the confirmation result regarding the first profile transfer to the first UE 810. This decision may be based on the subscription mediation server 850 information received from the first UE 810 in steps 8007 to 8011, or the identifier for supporting the processing status check function of the profile server 830, and whether the subscription mediation server 850 supported by the profile server 830 or the profile server 830 supports the processing status check function. In case that there is no subscription mediation server commonly supported by the first UE 810 and the profile server 830, and in case that the first UE 810 and profile server 830 mutually support the processing status check function of the profile server 830 (if the SM-DP+ and the device support SM-DP+ check process feature (or DS is not supported)), the profile server 830 may determine that the first UE 810 should check the result of processing the confirmation result regarding the first profile transfer through the processing status check function of the profile server 830.

In step 8023, the profile server 830 may notify the first UE 810 that the processing of the confirmation result regarding the first profile transfer is delayed. The response to the delay in processing the confirmation result regarding the first profile transfer may be an ES9+.ConfirmDeviceChange response. In addition, the response may optionally include one of the following pieces of information:
- Transaction ID
   : A session identifier shared between the first UE 810 and the profile server 830 related to the ongoing device change processing
- A profile server processing status check use indicator (checkProgessFlag)
   : An instruction for the first UE 810 to request the profile server 830 to check the profile server processing status
- A profile server processing check timepoint (retryDelay)
   : A timepoint at which the first UE 810 should request a profile server processing status check
- A device change session identifier (dcSessionId)

Furthermore, the response may include a signature generated by the profile server 830.

In step 8025, the first UE 810 may deliver the response of the profile server 830, received in step 8023, to the eSIM (not illustrated) of the first UE 810 and may verify the signature. In addition, in case that the verification succeeds, the eSIM (not illustrated) of the first UE 810 may terminate the current session (for example, RSP session) with the profile server 830. The LPA (not illustrated) of the first UE 810 may store the identifier (ICCID1) of the first profile requested in step 8011. Furthermore, the LPA (not illustrated) of the first UE 810 may optionally store the identifier (ICCID1) of the first profile requested in step 8011 by linking the same with the transaction ID or device change session identifier (dcSessionId) received in step 8023.

In step 8027, the first UE 810 may request the profile server 830 to check the profile server processing status. The profile server processing status check request may use the ES9+.CheckProgress function. In addition, the request may include the transaction ID or device change session identifier received from the profile server 830 in step 8023. Furthermore, the request may be made after the profile server processing status check timepoint received from the profile server 810 in step 8023 has elapsed. Upon receiving the request, the profile server 830 may confirm that the confirmation result regarding the first profile transfer related to the transaction ID or device change session identifier has been processed, and if processed, may return a normal (OK) or true value to the first UE 810, or if not processed, may return an error or false value thereto.

In step 8029, the profile server 830 may optionally prepare a profile for the second UE 520. This step 8029 may be performed concurrently with steps 8013, 8015, 8017, 8019, 8021, and 8023, and may reference steps 3023 in FIG. 3.

In step 8031, the first UE 810 may request the profile server 830 to check the profile server processing status. The profile server processing status check request may use the ES9+.CheckProgress function. In addition, the request may include the transaction ID or device change session identifier received from the profile server 830 in step 8023. Furthermore, the request may be made after the profile server processing status check timepoint received from the profile server 810 in step 8023 has elapsed, following the execution of step 8027. Upon receiving the request, the profile server 830 may confirm that the confirmation result regarding the first profile transfer related to the transaction ID or device change session identifier has been processed, and if processed, may return a normal (OK) or true value to the first UE 810, or if not processed, may return an error or false value thereto. In this embodiment, it is assumed that the processing of the confirmation result regarding the first profile transfer is completed after step 8029, and in step 8031, the profile server 830 returns a normal (OK) or true value. Since the first UE 810 receives a normal (OK) or true value in step 8031, the first UE 810 may determine that processing of the confirmation result regarding the first profile transfer associated with the transaction ID or device change session identifier delivered in step 8023 has been completed.

In step 8033, the first UE 810 may continue the process of changing the device of the first profile. Step 8033 may reference steps 8001, 8003, 8005, 8007, 8009, 8011, 8013, 8015, 8017, and 8019 or steps 3001, 3003, 3005, 3007, 3009, 3011, 3013, 3015, 3017, 3019, 3021, and 3023 in FIG. 3. However, operations of steps 8001, 8003, and 8013 or steps 3001, 3003, 3013, 3015, and 3023 may not be performed in step 8033.

In step 8033, in case that the profile server 830 has successfully performed a comparison verification of the hash value of the device change confirmation code received in step 8019 or step 3021 with the hash value of the device change confirmation code held thereby, the value (ccRequired) requesting input of the device change confirmation code may not be included in steps 3017 to 8015 performed in step 8033. In addition, step 3019 or step 8017 may not be performed in step 8033, and step 3021 or step 8019 may not include the hash value of the device change confirmation code, or the user 800 may generate a hash value by using the device change confirmation code input in the previously performed step 3019 or step 8017 and may deliver the same to the profile server 830 while including the hash value of the device change confirmation code. Furthermore, in case that step 3021 or step 8019 is performed in step 8035, the profile server 830 may not perform a comparison verification of the device change confirmation code hash value.

In step 8035, the profile server 830 may deliver a response regarding the confirmation result regarding the first profile transfer to the first UE 810. Step 8035 may reference step 3025 in FIG. 3. Thereafter, steps 3027, 3029 and 3031 in FIG. 3 may be performed with the user 800, the first UE 810, the second UE 820, the profile server 830, and the operator 840.

FIG. 9 is a sequence diagram illustrating a procedure according to an embodiment of the disclosure, in which the first UE requests the second UE to change the device of the profile installed in the first UE through a profile server, in case that a delay occurs in processing the device change request, the profile server notifies the first UE that the profile will deliver the processing result to the second UE through a subscription mediation server, the profile is prepared after the device change processing, the profile server registers an event corresponding to information that may be used to download the profile in the subscription mediation server, and the second UE downloads the profile prepared for the device change by using the information.

In FIG. 9, the configuration and description of the user 900, the first UE (existing UE, old device) 910, the second UE (new UE, new device) 920, the profile server (SM-DP+) 930, the subscription mediation server (SM-DS) 950, and the operator 940 are to be referenced from FIG. 2. For example, the user 900, the first UE 910, the second UE 920, the profile server 930, the subscription mediation server 950, and the operator 940 may correspond to the user 200, the first UE 210, the second UE 220, the first profile server 230, the second subscription mediation server 270, and the operator 250 in FIG. 2, respectively.

Referring to FIG. 9, in step 9001, the user 900 may request the first UE 910 to transfer the first profile. To this end, the user 900 may identify, through the first UE 910, information regarding the first profile (profile metadata) and information that the user intending to transfer the first profile should be aware of. The information regarding the first profile and the information that the user intending to transfer the first profile should be aware of may be stored in the first UE 910 and/or the first profile.

The information regarding the first profile may include, for example, the operator's name or logo, profile policy, and the like. The information that the user intending to transfer the first profile should be aware of may include, for example, at least from among the remaining number of profile transfers allowed by the operator, the cost the user must pay for the profile transfer, and the like. The first profile information may include content requiring the acquisition of information of the second UE 920 to which the profile is to be transferred. The information of the second UE 920 may optionally include at least one of the eUICC identifier installed in the second UE 920 and the type allocation code (TAC) of the second UE 920. In addition, the first UE 910 or the first profile may store at least one or more addresses of the profile server that the UE must connect to for profile transfer. The profile server that the UE must connect to for profile transfer may be, for example, the profile server 930.

In step 9003, the first UE 910 may acquire information of the second UE 920. The information of the second UE 920 may optionally include at least one of the eUICC identifier (EID) installed in the second UE 920 and the type allocation code (TAC) of the second UE 920. In addition, in case that the second UE 920 supports profile download information acquisition through a subscription mediation server, information of the second UE 920 may include the address (FQDN) of the subscription mediation server 950 supported by the second UE 920.

In step 9005, the first UE 1210 may establish a TLS connection with the profile server 1230 which is to be accessed to transfer the profile (TLS establishment).

In step 9007, the first UE 910 may initiate a mutual authentication process with the profile server 930. The mutual authentication may be a certificate-based mutual authentication where the eSIM (or eUICC) of the UE 910 and the subscription mediation server 950 authenticate each other by using an asymmetric key configured by a pair of a public key (PK) and a secret key (SK). The mutual authentication initiation request may be sent by the first UE 910 to the profile server 930 by using the ES9+.InitiateAuthentication function. The mutual authentication initiation request may optionally include information (euiccInfo1) of the eSIM (not illustrated) installed in the first UE 910 or information (lpaRspCapability) of the LPA (not illustrated).

In step 9009, the profile server 930 may deliver a mutual authentication initiation response corresponding to the mutual authentication initiation request of the first UE 910 to the first UE 910. The mutual authentication initiation response may be an ES9.InitiateAuthentication response. The mutual authentication initiation response may include information (serverRspCapability or sessionContext) of the profile server 930. In addition, depending on the embodiment, the mutual authentication initiation response may include a signature generated by the profile server 930, the digital certificate of the profile server 930 which may be used to verify the same, and the corresponding certificate chain.

In step 9011, the first UE 910 may request the profile server 930 to change the device of the first profile. The device change request may use the ES9+.AuthenticateClient function. The device change request may include the profile identifier (ICCID1) of the first profile, the eUICC identifier (EID2) installed in the second UE 920, the type allocation code (TAC2) of the second UE 920, or the like. The profile identifier (ICCID1) of the first profile, the eUICC identifier (EID2) installed in the second UE 920, or the type allocation code (TAC2) of the second UE 920 may be included in data object ctxParamsForDeviceChange, and these values may include a signature of the eSIM (not illustrated) installed in the first UE 910, the digital certificate of the eSIM (not illustrated) which may be used to verify the same, and the corresponding certificate chain. In addition, the device change request may optionally include the FQDN of one or more subscription mediation servers supported by the second UE 920. The aforementioned information may be included in data object ctxParamsForDeviceChange or included separately from data object ctxParamsForDeviceChange and delivered to the profile server 930.

In step 9013, the profile server 930 may determine that the processing of the device change request made by the first UE 910 could be delayed. Referring to steps 3013 and 3015 of FIG. 3, a delay in processing the device change request may occur in case that interworking with the operator 940 is temporarily unavailable, or in case that additional operations and time are required to prepare a profile for the second UE 1220 (determine whether it need more time to prepare a profile for the new device). In case that a delay in processing the device change request occurs, the profile server 930 may decide on a method to respond to the first UE 910 with the device change request processing result. This decision may be based on information of the subscription mediation server 950 supported by the second UE 920 received from the first UE 910 in step 9011, and whether the subscription mediation server supported by the profile server 930 or the profile server supports the processing status check function. In case that there is a subscription mediation server 950 commonly supported by the second UE 920 and the profile server 930, the profile server 930 may decide to deliver the device change request processing result to the second UE 920 through the subscription mediation server 950 commonly supported by the second UE 920 and the profile server 930. Depending on the embodiment, the profiler server 930 may determine whether it is possible to process the first profile device change requested by the first UE 910 (device change eligibility check).

In step 9015, the profile server 930 may notify the first UE 910 that the processing of the request to change the device of the first profile is delayed. The response to the delay in processing the request to change the device of the first profile may be an ES9+AuthenticateClient response. In case that the profile server 930 commonly supports at least some of subscription mediation servers 950 provided by the first UE 910, and in case that the profile server 930 decides to use the selected subscription mediation server 950 to notify of the device change (If the SM-DP+ can use one of SM-DS address(es) provided by the old device and decide to use the selected SM-DS to notify the device change progress), the profiler server 930 may decide to deliver the result of processing the confirmation result regarding the first profile transfer to the second UE 920 through the subscription mediation server 950. In addition, in case that the profile server 930 has decided to notify of the device change processing result through the subscription mediation server 950 in step 9013, the aforementioned response may include the address (smdsAddress) of the subscription mediation server 950 through which the device change processing result will be delivered.

In step 9017, the first UE 910 may deliver the response of the profile server 930 received in step 9015 to the eSIM (not illustrated) of the first UE 910 and may verify the signature. In addition, in case that the verification succeeds, the eSIM (not illustrated) of the first UE 910 may terminate the current session (for example, RSP session) with the profile server 930. The LPA (not illustrated) of the first UE 910 may store the identifier (ICCID1) of the first profile requested in step 9011.

In step 9019, the profile server 930 may determine whether it is possible to process the device change of the first profile as requested by the first UE 910. In addition, the profile server 930 may optionally prepare a profile for the second UE 920. This step 9019 may be performed concurrently with steps 9013, 9015, 9017, and 9023, and reference may be made to steps 3013 and 3015 in FIG. 3, with detailed descriptions thereof omitted herein.

In step 9021, the profile server 930 may register profile download information prepared according to the device change request processing of the first UE 910 in the subscription mediation server 950. The profile download information registration (subscription) request may use the ES12+.RegisterEvent function. The profile download information registration request may optionally include one or more of the following pieces of information:
- The eUICC identifier (EID) of the second UE 910
- The address of the profile server 930
- The event ID
- The profile identifier (ICCID1) for which the device change request was processed
- The hash value of the profile identifier (ICCID1) for which the device change request was processed

In step 9023, the first UE 910 may optionally deliver the address of the subscription mediation server 950 received from the profile server 930 to the second UE 920.

In step 9025, the second UE 920 may request an event from the subscription mediation server 950 and, if there is an event registered for the eUICC identifier (EID2) corresponding to the eSIM (not illustrated) of the second UE 920, may receive related information from the subscription mediation server 950 (polling). Alternatively, if the subscription mediation server 950 has an event registered for the eUICC identifier (EID2) corresponding to the eSIM (not illustrated) of the second UE 920, the subscription mediation server 950 may deliver the related information to the second UE 920 (push). The related information may include at least one or more of the following pieces of information:
- The address of the profile server 930
- The event identifier
- The profile identifier (ICCID1) for which the device change request was processed
- The hash value of the profile identifier (ICCID1) for which the device change request was processed

In addition, the subscription mediation server 950 may transmit, along with the aforementioned information, a signature generated by the subscription mediation server 950, the digital certificate of the subscription mediation server 950 which may be used to verify the same, and the corresponding certificate chain to the second UE 920.

In step 9027, the second UE 920 may verify the information acquired from the subscription mediation server 950 through the eSIM (not illustrated) of the second UE 920.

In step 9019, the second UE 920 may download the profile prepared for the device change from the profile server 930 by using the event identifier and the address of the profile server 930 acquired from the subscription mediation server 950.

FIG. 10 is a block diagram illustrating the components of a UE according to an embodiment of the disclosure.

Each UE described in the disclosure (for example, a first UE and a second UE) may correspond to the first UE or the second UE described with reference to FIG. 2. The first UE and the second UE may be an embodiment of the UE in FIG. 2, and the expressions "first" and "second" are used merely to indicate that each UE is a physically distinct UE.

As illustrated in FIG. 10, a UE may include a transceiver 1010 and a controller (processor) 1020. In addition, the UE may also include a UICC 1030. For example, the UICC 1030 may be inserted into the UE or may be an eUICC embedded in the UE.

The transceiver 1010 may transmit and receive signals, information, data, and the like with a profile server.

According to an embodiment of the disclosure, the transceiver 1010 may transmit a message requesting profile transfer to the profile server, may receive an activation code, information regarding whether an event is registered in a subscription mediation server, and information regarding whether profile deletion is required from the profile server, and may transmit the profile deletion result to the profile server.

According to an embodiment of the disclosure, the transceiver 1010 may transmit a message requesting a profile to the profile server by using the activation code and may receive a profile package.

According to an embodiment of the disclosure, the transceiver 1010 may transmit an event request message to the subscription mediation server, may receive an event list from the subscription mediation server, may transmit a message requesting a profile to the profile server by using the event list, and may receive a profile package.

According to an embodiment of the disclosure, the transceiver 1010 may receive an event registration (subscription) notification from the subscription mediation server, may transmit an event request message to the subscription mediation server, may receive an event list from the subscription mediation server, may transmit a message requesting a profile to the profile server, may receive a profile package from the profile server, and may control the UE to install the profile package.

Meanwhile, the processor 1020 is a component for overall control of the UE. The processor 1020 may control the overall operation of the UE according to various embodiments of the disclosure. The processor 1020 may be referred to as a controller. According to an embodiment of the disclosure, the processor 1020 may include at least one or more processors.

According to an embodiment of the disclosure, the processor 1020 may control the UE to receive a profile transfer request from a user, verify profile transfer information, transmit a message requesting profile transfer to the profile server, receive an activation code or information regarding whether an event is registered in the subscription mediation server and whether profile deletion is required from the profile server, delete the profile, transmit the profile deletion result to the profile server, and deliver the activation code or profile transfer preparation completion to another UE.

According to an embodiment of the disclosure, the processor 1020 may control the UE to receive an activation code from another UE, transmit a message requesting a profile to the profile server by using the activation code, receive a profile package from the profile server, and install the profile package.

According to an embodiment of the disclosure, the processor 1020 may control the UE to receive an activation code, profile transfer preparation completion, or event registration completion from another UE, determine a subscription mediation server by using the activation code or UE configuration, transmit an event request message to the subscription mediation server, receive an event list from the subscription mediation server, transmit a message requesting a profile to the profile server by using the event list, receive a profile package from the profile server, and install the profile package.

According to an embodiment of the disclosure, the processor 1020 may control the UE to receive an event registration notification from the subscription mediation server, determine the subscription mediation server by using the event registration notification identifier, transmit an event request message to the subscription mediation server, receive an event list from the subscription mediation server, transmit a message requesting a profile to the profile server by using the event list, receive a profile package from the profile server, and install the profile package.

According to an embodiment of the disclosure, the UICC 1030 may download a profile and install the profile. In addition, the UICC 1030 may manage the profile.

The UICC 1030 may operate under the control of the processor 1020. Alternatively, the UICC 1030 may include a processor or a controller for installing a profile, or may have an application installed therein. A portion of the application may also be installed in the processor 1020.

Meanwhile, the UE may further include a storage unit (not illustrated), which may store data such as basic programs, application programs, and configuration information for the operation of the UE. In addition, the storage unit may include at least one storage medium from among a flash memory type storage medium, a hard disk type storage medium, a multimedia card micro type storage medium, a card-type memory (e.g., SD or XD memory), a magnetic memory, a magnetic disk, an optical disk, a random access memory (RAM), a static random access memory (SRAM), a read-only memory (ROM), a programmable read-only memory (PROM), and an electrically erasable programmable read-only memory (EEPROM). Furthermore, the processor 1020 may perform various operations by using the various programs, contents, and data stored in the storage unit.

A UE configured to manage a profile for connecting to a network by using an embedded universal integrated circuit card (eUICC) in a wireless communication system according to an embodiment of the disclosure may include: a transceiver; and at least one processor configured to control the UE to receive a request to transfer the profile from a user, verify profile transfer information, transmit a message requesting profile transfer to the profile server, receive an activation code or information regarding whether an event is registered and whether profile deletion is required from the profile server, delete the profile, transmit the profile deletion result to the profile server, deliver the activation code or profile transfer request result to another UE, receive the activation code or profile transfer request result from another UE, transmit an event request message to a subscription mediation server by using the activation code or configurations stored in the UE, receive an event list from the subscription mediation server, transmit a message requesting a profile to the profile server by using the event list, receive a profile package from the profile server, and install the profile package.

A UE configured to manage a profile for connecting to a network by using an embedded universal integrated circuit card (eUICC) in a wireless communication system according to an embodiment of the disclosure may include: a transceiver; and at least one processor configured to control the UE to receive a request to transfer the profile from a user, verify profile transfer information, transmit a message requesting profile transfer to the profile server, receive an activation code or information regarding whether an event is registered and whether profile deletion is required from the profile server, delete the profile, transmit the profile deletion result to the profile server, deliver the profile transfer request result to another UE, receive an event registration notification from a subscription mediation server, transmit an event request message to the subscription mediation server by using the event registration notification, receive an event list from the subscription mediation server, transmit a message requesting a profile to the profile server by using the event list, receive a profile package from the profile server, and install the profile package.

FIG. 11 is a block diagram illustrating the components of a profile server according to an embodiment of the disclosure.

Each profile server described in the disclosure (for example, a first profile server and a second profile server) may correspond to the profile server described with reference to FIG. 2. The first profile server and the second profile server may be an embodiment of the server in FIG. 2, and the expressions "first" and "second" are used merely to indicate that each profile server is a physically distinct profile server.

Referring to FIG. 11, a profile server may include a transmitter 1110 and a controller (processor) 1120.

The transmitter 1110 may transmit and receive signals, information, data, and the like with a UE, a subscription mediation server, or an operator.

According to an embodiment of the disclosure, the transmitter 1110 may receive a profile transfer request message from a UE, may transmit an event registration request message to a subscription mediation server, may transmit a message including an activation code and information regarding whether profile deletion is required to the UE, may receive a profile deletion message from the UE, may transmit an event providability request message to the subscription mediation server, may receive a profile download request message from the UE, may transmit a profile package to the UE in case that the profile is in a downloadable state, and may transmit an error code in case that the profile is in a non-downloadable state.

Meanwhile, the processor 1120 is a component for overall control of the profile server. The processor 1120 may control the overall operation of the profile server according to various embodiments of the disclosure. The processor 1120 may be referred to as a controller. According to an embodiment of the disclosure, the processor 1120 may include at least one or more processors.

According to an embodiment of the disclosure, the processor 1120 may control the profile server to receive a profile transfer request message from a UE, determine whether the profile is transferable, prepare the profile for existing profile transfer, generate an activation code which may be used to download a profile, configure the state of the prepared profile to a non-downloadable state in case that deletion of the existing profile is required, determine whether event registration in a subscription mediation server is necessary, determine whether the event to be registered in the subscription mediation server can be provided, transmit an event registration request message including event providability to the subscription mediation server, transmit a message including the activation code and information regarding whether profile deletion is required to the UE, receive the profile deletion result from the UE, change the profile to a downloadable state, transmit an event providability request message to the subscription mediation server, receive a profile download request message from the UE, determine whether the profile is in a downloadable state, transmit a profile package to the UE in case that the profile is in a downloadable state, and transmit an error code in case that the profile is in a non-downloadable state.

Meanwhile, the profile server may further include a storage unit (not illustrated), which may store data such as basic programs, application programs, and configuration information for the operation of the profile server. In addition, the storage unit may include at least one storage medium from among a flash memory type storage medium, a hard disk type storage medium, a multimedia card micro type storage medium, a card-type memory (e.g., SD or XD memory), a magnetic memory, a magnetic disk, an optical disk, a random access memory (RAM), a static random access memory (SRAM), a read-only memory (ROM), a programmable read-only memory (PROM), and an electrically erasable programmable read-only memory (EEPROM). Furthermore, the processor 10(1020 may perform various operations by using the various programs, contents, and data stored in the storage unit.

A profile server configured to provide a profile for network connection to a UE in a wireless communication system according to an embodiment of the disclosure may include: a transmitter; and at least one processor configured to control the profile server to receive a message requesting transfer of the profile from the UE, determine whether the profile is transferable, generate an activation code which may be used to download the profile or a new profile, configure the state of a prepared profile to a non-downloadable state in case that the profile is transferable after being deleted from the UE, transmit an event registration request message regarding the prepared profile to a subscription mediation server, further request the subscription mediation server, in case that the requested event can be provided after deletion of the profile, such that the event cannot be provided, transmit the activation code or information regarding whether an event is registered and whether the profile needs to be deleted to the UE, receive the profile deletion result from the UE, change the profile to a downloadable state, transmit an event providability request message to the subscription mediation server, receive a profile download request message from the UE, determine whether the profile is in a downloadable state, transmit a profile package to the UE in case that the profile is in a downloadable state, transmit an error code or verify the profile deletion result included in the profile download request in case that the profile is in a non-downloadable state, and transmit an error code in case that the profile deletion result is absent or in case that the verification fails.

FIG. 12 is a block diagram illustrating the components of a subscription mediation server according to an embodiment of the disclosure.

Referring to FIG. 12, a subscription mediation server may include a transmitter 1210 and a controller (processor) 1220.

The transmitter 1210 may transmit and receive signals, information, data, and the like with a UE, a profile server, or an operator.

According to an embodiment of the disclosure, the transmitter 1210 may receive an event registration request message from the profile server, may receive an event providability request message from the profile server, may transmit an event registration notification including an event registration notification identifier to the UE, may receive an event request message from the UE, and may transmit an event list to the UE.

Meanwhile, the processor 1220 is a component for overall control of the profile server. The processor 1220 can control the overall operation of the profile server according to various embodiments of the disclosure. The processor 1220 may be referred to as a controller. According to an embodiment of the disclosure, the processor 1220 may include at least one or more processors.

According to an embodiment of the disclosure, the processor 1220 may receive an event registration request message from the profile server, may generate an event list, may configure the generated event to a non-providable state, may receive an event providability request message from the profile server, may configure the event to a providable state, may transmit an event registration notification including an event registration notification identifier to the UE, may receive an event request message from the UE, and may transmit an event list to the UE.

Meanwhile, the subscription mediation server may further include a storage unit (not illustrated), which may store data such as basic programs, application programs, and configuration information for the operation of the profile server. In addition, the storage unit may include at least one storage medium from among a flash memory type storage medium, a hard disk type storage medium, a multimedia card micro type storage medium, a card-type memory (e.g., SD or XD memory), a magnetic memory, a magnetic disk, an optical disk, a random access memory (RAM), a static random access memory (SRAM), a read-only memory (ROM), a programmable read-only memory (PROM), and an electrically erasable programmable read-only memory (EEPROM). Furthermore, the processor 1120 may perform various operations by using the various programs, contents, and data stored in the storage unit.

A subscription mediation server configured to provide profile download information for network connection to a UE in a wireless communication system according to an embodiment of the disclosure may include: a transceiver; and at least one processor configured to control the subscription mediation server to receive an event registration request message regarding a prepared profile and information regarding whether an event can be provided from the profile server, generate an event list, configured the event to an non-providable state in case that event provision is impossible, transmit a configuration regarding whether to generate and provide an event to the profile server, receive an event providability request message from the profile server, configure the event to a providable state, optionally transmit an event registration notification including an event registration notification identifier to the UE, receive an event request message from the UE, and transmit the event list to the UE.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

It should be appreciated that the embodiments and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular expression may include a plural expression unless they are definitely different in a context. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such expressions as "a first", "a second", "the first", and "the second" may modify corresponding elements regardless of the order or importance thereof, and may be used to simply distinguish a corresponding element from the other elements and does not limit the corresponding elements. When an element (e.g., a first element) is referred to, with or without the term "operatively" or "communicatively", as "coupled with/to" or "connected with/to" another element (e.g., a second element), the element may be coupled/connected with/to the other element directly or via another element (e.g., a third element).

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments of the disclosure may be implemented as software (e.g., a program) including instructions that are stored in a storage medium (e.g., an internal memory or external memory) that is readable by a machine (e.g., a computer). The machine is a device that can invoke the stored instructions from the storage medium and operate according to the invoked instructions, and may include UEs according to various embodiments of the disclosure (e.g., the first UE 210 and the second UE 220). When the instructions are executed by a processor (e.g., the processor 920 of FIG. 9, the processor 1020 of FIG. 10, or the processor 1120 of FIG. 11), the processor may perform functions corresponding to the instructions, with or without using one or more other components under the control of the processor. The instructions may include a code generated or executed by a complier or an interpreter.

The machine-readable storage medium may be provided in the form of a non-transitory storage medium. Herein, the term "non-transitory" simply means that the storage medium is a tangible device, and does not include a signal, but this term does not differentiate between where data is semi-permanently stored in the storage medium and where the data is temporarily stored in the storage medium.

Methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each element (e.g., a module or a program) according to various embodiments may include a single entity or multiple entities, some the above-described sub elements may be omitted, or other sub elements may be additionally included in various embodiments. Alternatively or additionally, some elements (e.g., modules or programs) may be integrated into a single entity. In such a case, the integrated entity may still perform the functions, which have been performed by each of the corresponding elements before the integration, in the same or similar manner. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method performed by a terminal in a wireless communication system, the method comprising:
identifying information requesting transfer of a profile to another terminal;
transmitting, to a profile server, a device change request message regarding the profile;
in case that processing of a device change request regarding the profile is delayed, receiving, from the profile server, a device change request response message comprising information on a subscription mediation server capable of confirming a device change processing result regarding the profile;
receiving, from the subscription mediation server, a message comprising information associated with completion of the processing of the device change request regarding the profile; and
resuming a device change processing process regarding the profile with the profile server.

2. The method of claim 1, wherein the device change request message comprises at least one of information on a subscription mediation server supported by the terminal or information indicating whether the terminal supports a function of confirming a device change processing status of the profile server.

3. The method of claim 1, wherein the device change request response message comprises at least one of an address of the subscription mediation server, an identifier of a section shared by the terminal and the profile server in which device change processing is being performed, information on a timepoint to request a profile processing status confirmation, or a device change session identifier.

4. The method of claim 1, wherein the information associated with completion of the processing of the device change request regarding the profile comprises at least one of an address of the profile server, an event identifier, an identifier of a section shared by the terminal and the profile server in which device change processing is being performed, a device change session identifier, or an identifier of the profile.

5. A method performed by a profile server in a wireless communication system, the method comprising:
receiving, from a terminal, a device change request message regarding a profile;
in case that processing of a device change request regarding the profile is delayed, transmitting, to the terminal, a device change request response message comprising information on a subscription mediation server capable of confirming a device change processing result regarding the profile;
transmitting, to the subscription mediation server, an event registration request message requesting event registration regarding the device change request processing result of the terminal; and
resuming a device change processing process regarding the profile with the terminal based on a transmission of information associated with completion of the processing of the device change request regarding the profile from the subscription mediation server to the terminal.

6. The method of claim 5, wherein the device change request message comprises at least one of information on a subscription mediation server supported by the terminal or information indicating whether the terminal supports a function of confirming a device change processing status of the profile server.

7. The method of claim 5, wherein the device change request response message comprises at least one of an address of the subscription mediation server, an identifier of a section shared by the terminal and the profile server in which device change processing is being performed, information on a timepoint to request a profile processing status confirmation, or a device change session identifier.

8. The method of claim 5, wherein the event registration request message comprises at least one of an address of the profile server, an event identifier, an event type, an identifier of a section shared by the terminal and the profile server in which device change processing is being performed, a device change session identifier, or an identifier of the profile.

9. A terminal in a wireless communication system, the terminal comprising:
a transceiver; and
a controller configured to identify information requesting transfer of a profile to another terminal, transmit, to a profile server through the transceiver, a device change request message regarding the profile, in case that processing of a device change request regarding the profile is delayed, receive a device change request response message comprising information on a subscription mediation server capable of confirming a device change processing result regarding the profile from the profile server through the transceiver, receive a message comprising information associated with completion of the processing of the device change request regarding the profile from the subscription mediation server through the transceiver, and resume a device change processing process regarding the profile with the profile server.

10. The terminal of claim 9, wherein the device change request message comprises at least one of information on a subscription mediation server supported by the terminal or information indicating whether the terminal supports a function of confirming a device change processing status of the profile server.

11. The terminal of claim 9, wherein the device change request response message comprises at least one of an address of the subscription mediation server, an identifier of a section shared by the terminal and the profile server in which device change processing is being performed, information on a timepoint to request a profile processing status confirmation, or a device change session identifier.

12. The terminal of claim 9, wherein the information associated with completion of the processing of the device change request regarding the profile comprises at least one of an address of the profile server, an event identifier, an identifier of a section shared by the terminal and the profile server in which device change processing is being performed, a device change session identifier, or an identifier of the profile.

13. A profile server in a wireless communication system, the profile server comprising:
a transceiver; and
a controller configured to receive, from a terminal through the transceiver, a device change request message regarding a profile, in case that processing of a device change request regarding the profile is delayed, transmit, to the terminal through the transceiver, a device change request response message comprising information regarding a subscription mediation server capable of confirming a device change processing result regarding the profile, transmit, to the subscription mediation server through the transceiver, an event registration request message requesting event registration regarding the device change request processing result of the terminal, and resume a device change processing process regarding the profile with the terminal based on a transmission of information associated with completion of the processing of the device change request regarding the profile from the subscription mediation server to the terminal.

14. The profile server of claim 13, wherein the device change request message comprises at least one of information on a subscription mediation server supported by the terminal or information indicating whether the terminal supports a function of confirming a device change processing status of the profile server, and
wherein the device change request response message comprises at least one of an address of the subscription mediation server, an identifier of a section shared by the terminal and the profile server in which device change processing is being performed, information on a timepoint to request a profile processing status confirmation, or a device change session identifier.

15. The profile server of claim 13, wherein the event registration request message comprises at least one of an address of the profile server, an event identifier, an event type, an identifier of a section shared by the terminal and the profile server in which device change processing is being performed, a device change session identifier, or an identifier of the profile.
